(19) **Europäisches Patentamt**
**European Patent Office**
**Office européen des brevets**

(11) **EP 4 775 357 A1**

(12) **EUROPEAN PATENT APPLICATION**
published in accordance with Art. 153(4) EPC

(43) Date of publication:
**15.07.2026 Bulletin 2026/29**

(21) Application number: **24862933.9**

(22) Date of filing: **09.09.2024**

(51) International Patent Classification (IPC):
**B25J 9/10** *(2006.01)*

(52) Cooperative Patent Classification (CPC):
**B25J 9/10**

(86) International application number:
**PCT/JP2024/032211**

(87) International publication number:
**WO 2025/053285 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 JP 2023146571**

(71) Applicants:
• **Robot Industrial Basic Technology Collaborative Innovation Partnership Tokyo 105-0003 (JP)**

• **National University Corporation Kobe University Kobe-shi, Hyogo 657-8501 (JP)**

(72) Inventor: **YOKOKOHJI, Yasuyoshi Kobe-shi, Hyogo 657-8501 (JP)**

(74) Representative: **Kleine, Hubertus et al Loesenbeck - Specht - Dantz Patent- und Rechtsanwälte Am Zwinger 2 33602 Bielefeld (DE)**

(54) **PROGRAM, STORAGE MEDIUM, INFORMATION PROCESSING DEVICE, SYSTEM, AND METHOD FOR CONTROLLING OPERATION OF ROBOT**

(57) A program causes the computer to carry out: performing singular value decomposition on a first Jacobian matrix to generate a second Jacobian matrix including a first matrix, a second matrix, and a first singular matrix including singular values in its diagonal elements; determining to perform either first processing performed in a case of being at or near a singularity or second processing performed in a case of being away from the singularity, based on a result of comparison between the singular values and a first threshold; in the first processing, generating a third Jacobian matrix by transforming the diagonal elements in the first singular matrix, and determining and outputting an operation command value for a plurality of joints (JT) of a robot (10) by using the third Jacobian matrix and a movement command value for a movable part (12) of the robot; and in the second processing, determining and outputting the operation command value by using the first or second Jacobian matrix and the movement command value.

FIG. 1

## Description

### Technical Field

The present disclosure relates to a program, a storage medium, an information processing apparatus, a system, and a method of controlling the operation of a robot.

### Background Art

For example, Patent Literature 1 discloses a system that addresses singularities while a multi-axis machine including a kinematic link mechanism with a plurality of joints is being operated. In this system, numerical control using a Jacobian matrix is performed. The Jacobian matrix is decomposed by singular value decomposition into: an orthonormal matrix including singular values; left singular vectors; and right singular vectors. By using the results of the singular value decomposition, a joint at a singularity or in a near-singularity state is determined, and by using a singular value and a left singular vector, a column of the Jacobian matrix, the column being associated with the determined joint, is transformed, and thereby the Jacobian matrix is modified.

### Citation List

### Patent Literature

PTL 1: Japanese Patent No. 5393461

### Summary of Invention

### Technical Problem

In Patent Literature 1, a virtual joint, obtained by calculating a left singular vector using a singular value, replaces a column of the Jacobian matrix, the column being associated with the determined joint. As a result, the relationship between the operating velocities of the respective joints and the operating velocity of the distal end of the link mechanism, the relationship being originally inherent in the Jacobian matrix, may be lost. The present disclosure provides a program, a storage medium, an information processing apparatus, a system, and a method to realize novel robot operation control corresponding to singularities by using singular value decomposition of a Jacobian matrix.

### Solution to Problem

A program according to one aspect of the present disclosure is a program for controlling operation of a robot, the robot including a plurality of joints and a movable part that is moved as a result of the plurality of joints operating, the program causing a computer to carry out: performing singular value decomposition on a first Jacobian matrix that associates operating velocities of the plurality of respective joints with a moving velocity of the movable part to generate a second Jacobian matrix including a first matrix, a second matrix, and a first singular matrix, the first matrix including, in its elements, first basis vectors that span an operating velocity space of the joints, the second matrix including, in its elements, second basis vectors that span a moving velocity space of the movable part, the first singular matrix including singular values in its diagonal elements; determining, as processing to be performed, either first processing or second processing based on a result of comparison between the singular values and a first threshold, and performing the determined processing, the first processing being performed in a case where the robot is at a singularity and in a case where the robot is near the singularity, the second processing being performed in a case where the robot is away from the singularity; in the first processing, generating a third Jacobian matrix by transforming the diagonal elements in the first singular matrix; in the first processing, determining an operation command value to command operation of the plurality of joints by using the third Jacobian matrix and a movement command value to command movement of the movable part, and outputting the determined operation command value; and in the second processing, determining the operation command value by using the first or second Jacobian matrix and the movement command value, and outputting the determined operation command value.

### Brief Description of Drawings

FIG. 1 shows one example of the configuration of a robot system according to an illustrative embodiment.

FIG. 2 is a conceptual diagram showing the configuration of joints of a robotic arm of FIG. 1.

FIG. 3 is a block diagram showing one example of the configuration of the robot system according to the embodiment.

FIG. 4 is a conceptual diagram showing one example of a posture of the robotic arm at a singularity.

FIG. 5 is a conceptual diagram showing one example of a posture of the robotic arm at a singularity.

FIG. 6 is a conceptual diagram showing one example of a posture of the robotic arm at a singularity.

FIG. 7 is a conceptual diagram showing one example of a posture of the robotic arm at a singularity.

FIG. 8 is flowchart showing one example of singularity-related processing performed by an information processing apparatus according to the embodiment.

FIG. 9 is a flowchart showing one example of singularity-related processing performed by the information processing apparatus according to the embodiment.

FIG. 10 is a flowchart showing one example of singularity-related processing performed by the information processing apparatus according to the embodiment.

FIG. 11 is a flowchart showing one example of singularity-related processing performed by the information processing apparatus according to the embodiment.

FIG. 12 is a flowchart showing one example of singularity-related processing performed by the information processing apparatus according to the embodiment.

FIG. 13A is a conceptual diagram showing one example of self-motion of the robotic arm in the case of a shoulder singular posture.

FIG. 13B is a conceptual diagram showing one example of self-motion of the robotic arm in the case of a shoulder singular posture.

FIG. 13C is a conceptual diagram showing one example of self-motion of the robotic arm in the case of a shoulder singular posture.

FIG. 14 shows one example of the configuration of a robot system according to a variation.

## Description of Embodiments

Hereinafter, illustrative embodiments of the present disclosure are described with reference to the drawings. All the embodiments described below illustrate comprehensive or specific examples. Among the components in the embodiments below, components that are not recited in any of the independent claims, each of which defines the broadest concept of the present disclosure, are described as optional components. Each of the accompanying drawings is a schematic drawing, and is not necessarily an exactly illustrated drawing. In each drawing, substantially the same components are denoted by the same reference signs, and in some cases, redundant descriptions are omitted or simplified. In the present specification and the claims, "an apparatus" or "a device" can mean not only a single apparatus or a single device, but also a system including multiple apparatuses or multiple devices.

[Configuration of Robot System]

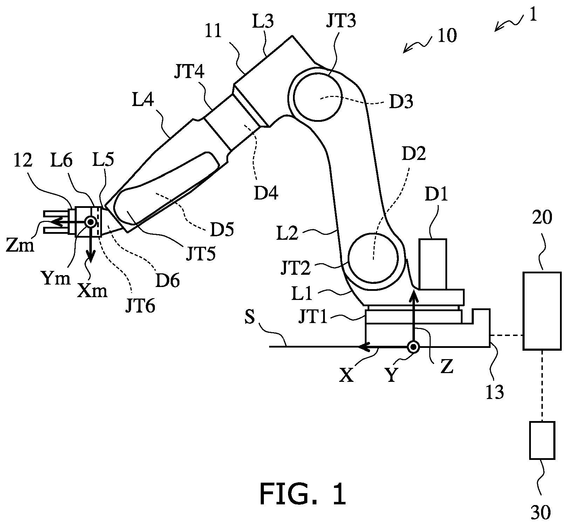

Hereinafter, the configuration of a robot system 1 according to an embodiment is described. FIG. 1 is a schematic diagram showing one example of the configuration of the robot system 1 according to the embodiment. As shown in FIG. 1, the robot system 1 according to the embodiment includes a robot 10, a controller 20, and a user interface 30. As a non-limiting example, in the present embodiment, the robot system 1 functions as a system for performing manipulation control of the robot 10; the user interface 30 functions as a manipulation controller; and the robot 10 operates in accordance with an operation inputted to the manipulation controller. The controller 20 controls overall operation of the robot system 1.

The robot 10 includes a link structure 11 and a movable part 12. The link structure 11 includes a plurality of links L and a plurality of joints JT. The plurality of joints JT connect the plurality of links L in such a manner that the plurality of links L are operable. The movable part 12 is mounted to the link structure 11. In the present embodiment, the movable part 12 is mounted to the distal end of the link structure 11. As a result of the plurality of joints JT operating, the link structure 11 can move the movable part 12 to various positions and orientations.

As a non-limiting example, in the present embodiment, the link structure 11 is an articulated robotic arm, and is, for example, an industrial robotic arm. It will suffice if the link structure 11 has a configuration in which the plurality of links L are connected by the plurality of joints JT, and the link structure 11 may be, for example, a robotic leg.

Further, the link structure 11 has a vertical articulated arm structure, and includes six links L1 to L6 and six joints JT1 to JT6 as the plurality of links L and the plurality of joints JT. The link structure 11 as a robotic arm is not limited to the above example, but may have a different type of arm structure, such as a horizontal articulated arm structure. Each of the number of links L and the number of joints JT may be five or less, or may be seven or more. In the description below, the link structure 11 is also referred to as a robotic arm 11. The "joints" are referred to as "joint JT1" to "joint JT6" when the individual joints are distinguished from each other, and as "joints JT" when the individual joints are not distinguished from each other.

The "links" are referred to as "link L1" to "link L6" when the individual links are distinguished from each other, and as "links L" when the individual links are not distinguished from each other.

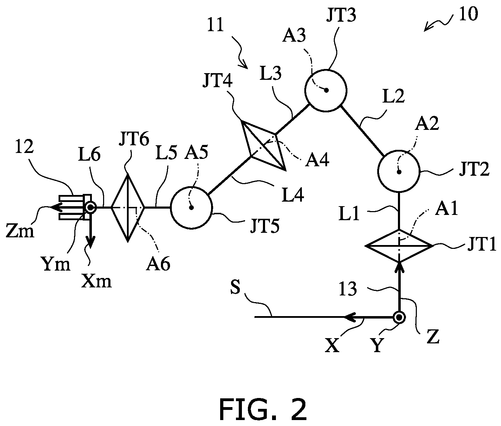

FIG. 2 is a conceptual diagram showing the configuration of the joints of the robotic arm 11 of FIG. 1. As shown in FIG. 1 and FIG. 2, the base of the robotic arm 11 is fixed to a platform 13. The links L1 to L6 are sequentially arranged from the base of the robotic arm 11 toward the distal end thereof. The joint JT1 connects the link L1 to the platform 13, such that the link L1 is rotatable about an axis A1. The joint JT2 connects the link L2 to the link L1, such that the link L2 is rotatable about an axis A2. The direction of the axis A2 crosses the direction of the axis A1, and is, for example, orthogonal to the direction of the axis A1. The joint JT3 connects the link L3 to the link L2, such that the link L3 is rotatable about an axis A3. The direction of the axis A3 extends along the direction of the axis A2, and is, for example, parallel to the direction of the axis A2. The joint JT4 connects the link L4 to the link L3, such that the Link L4 is rotatable about an axis A4. The direction of the axis A4 crosses the direction of the axis A3, and is, for example, orthogonal to the direction of the axis A3. The joint JT5 connects the link L5 to the link L4, such that the Link 5 is rotatable about an axis A5. The direction of the axis A5 crosses the direction of the axis A4, and is, for example, orthogonal to the direction of the axis A4. The joint JT6 connects the link L6 to the link L5, such that the link L6 is rotatable about an axis A6. The direction of the axis A6 crosses the direction of the axis A5, and is, for example, orthogonal to the direction of the axis A5.

Each of the joints JT1 to JT6 of the vertical articulated robotic arm 11 is a revolute joint. Alternatively, at least one of the joints JT1 to JT6 may be a prismatic joint. For example, each of the joints JT1 to JT3 may be a prismatic joint. In this case, below-described singularities of the robotic arm 11 are different from those in the case where each of the joints JT1 to JT6 is a revolute joint.

The link L6 includes a mechanical interface at its distal end. The link L6 is connected to the movable part 12 via the mechanical interface. Via the mechanical interface, the movable part 12 can transmit and receive signals and be supplied with electric power. The movable part 12 has a structure capable of acting on a workpiece, and is also referred to as an end effector. The functionality of the movable part 12 is not particularly limited. In the present embodiment, the movable part 12 has a function to hold a workpiece. Hereinafter, the movable part 12 is also referred to as the end effector 12.

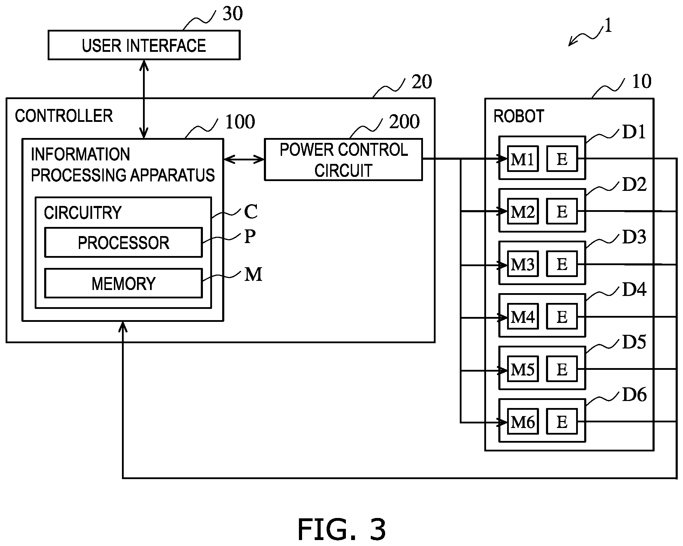

The robotic arm 11 includes drivers D1 to D6 to drive the respective joints JT1 to JT6. As shown in FIG. 3, the drivers D1 to D6 may include, as their driving sources, motors M1 to M6, respectively. The drivers D1 to D6 may further include reduction gears that transmit rotational driving force of the motors M1 to M6. FIG. 3 is a block diagram showing one example of the configuration of the robot system 1 according to the embodiment. In the present embodiment, each of the motors M1 to M6 is a servomotor, and includes an electric motor and a rotation sensor E. The rotation sensor E is, for example, an encoder, and detects the amount of rotation of the electric motor. The operation of each of the motors M1 to M6 is controlled by the controller 20. The controller 20 performs feedback control of the motors M1 to M6 by using, as feedback information, electric current values applied to the respective motors M1 to M6 and results of detection by the respective rotation sensors E.

As shown in FIG. 1 and FIG. 2, the user interface 30 is connected to the controller 20 via wired communication, wireless communication, or a combination of these. Any type of wired communication and wireless communication may be used. The user interface 30 receives an input from an operator, and outputs a signal based on the content of the input to the controller 20. For example, the user interface 30 receives an input of an operation to perform manipulation control of the robotic arm 11. The content of the input relates at least to a target velocity of the end effector 12 moved by the robotic arm 11. The target velocity includes a target moving direction of the end effector 12 and a target speed of the end effector 12 in the moving direction. The user interface 30 outputs, to the controller 20, a signal that commands the target velocity of the end effector 12 in accordance with the content of the input for manipulation control.

For example, the user interface 30 receives an input of information about the specifications of the robot 10, and outputs a signal representing the information to the controller 20. The information may include: the number of links L and the length of each of the links L; the number of joints JT and the type of each of the joints JT; the joint(s) JT connected to each of the links L; and the position and direction of the axis A of each of the joints JT connected to the links L.

The length of a link L may be the length of the link L itself, or may be the distance between two joints JT connected to the link L. The type of a joint JT may represent a revolute joint or a prismatic joint. The position of the axis A of a joint JT may represent the position of the rotational axis of the revolute joint, or the position of the linear motion axis of the prismatic joint, relative to the link(s) L to which the joint JT is connected. The position of the axis A of a joint JT may represent a relative position between two axes A of two joints JT connected to a link L, for example, the distance between the two axes A. The direction of the axis A of a joint JT may represent the direction of the rotational axis of the revolute joint, or the direction of the linear motion axis of the prismatic joint, relative to the link(s) L to which the joint JT is connected. The direction of the axis A of a joint JT may represent a relative direction between two axes A of two joints JT connected to a link L, for example, an angle between the two axes A.

The user interface 30 may be any of the following: a control arm having a structure similar to that of the robotic arm 11; a known operating device to operate a robot; a known teaching device to teach a robot, such as a teach pendant; a computer such as a personal computer; a smart device such as a smartphone or a tablet; a game terminal; any other operating device; any other terminal device; a device utilizing any of these; a device improved from any of these; or a combination of two or more of the above devices. The user interface 30 may include, as input means, a device that receives an input via an operation performed by an operator. Examples of such a device include a button, a lever, a dial, a joystick, a mouse, a key, a touch panel, a motion capture device, or a combination of two or more of these.

In the present embodiment, the user interface 30 includes a joystick. A direction in which the joystick is tilted may represent a target moving direction of the end effector 12, and an angle by which the joystick is tilted may represent a target speed of the end effector 12 in the moving direction.

The controller 20 is connected to the robot 10 via wired communication, wireless communication, or a combination of these. Any type of wired communication and wireless communication may be used. The controller 20 controls the operation of the robot 10 in accordance with a command included in a signal received from the user interface 30. The controller 20 determines elements included in a control program for the robot 10 by using information about the specifications of the robot 10, the information being included in the signal received from the user interface 30. As a non-limiting example, in the present embodiment, the controller 20 also controls electric power supply to the robot 10.

As shown in FIG. 3, the controller 20 includes an information processing apparatus 100 and a power control circuit 200. In the present embodiment, the information processing apparatus 100 and the power control circuit 200 are included in one controller 20. Alternatively, the information processing apparatus 100 and the power control circuit 200 may be separate devices that are positioned away from each other, and may be connected to each other via wired communication, wireless communication, or a combination of these. Any type of wired communication and wireless communication may be used.

The power control circuit 200 includes at least one of an amplifier, a converter, or an inverter, and controls electric power supplied to the robot 10. The power control circuit 200 supplies electric currents to the motors M1 to M6 of the drivers D1 to D6 of the robotic arm 11, respectively, in accordance with electric current values included in a command received from the information processing apparatus 100.

The information processing apparatus 100 includes circuitry C, and the circuitry C includes a processor P and a memory M. The circuitry C may include processing circuitry. For example, the information processing apparatus 100 may be an electronic circuit board, an electronic control unit, a microcomputer, a personal computer, a workstation, a smart device such as a smartphone or tablet, or any other electronic equipment. The memory M stores programs executed by the processor P and various data. The memory M stores the control program for the robot 10.

The information processing apparatus 100 may further include, as storage means, a hard disk drive (HDD) or a solid state drive (SSD). The memory M includes a RAM (Random Access Memory), which is a volatile memory, and a ROM (Read-Only Memory), which is a nonvolatile memory.

The processor P forms a computer system together with the RAM and ROM. The computer system may realize the functions of the information processing apparatus 100 by executing, with the processor P, a program stored in the ROM while using the RAM as a work area. The functions of the information processing apparatus 100 may be partly or entirely realized by the above computer system, or may be partly or entirely realized by a dedicated hardware circuit such as an electronic circuit or an integrated circuit, or may be partly or entirely realized by a combination of the above computer system and a hardware circuit. The information processing apparatus 100 may be configured such that a single device performs each processing by centralized control, or may be configured such that multiple devices perform each processing by distributed control in cooperation with each other.

As a non-limiting example, the processor P may include a CPU (Central Processing Unit), MPU (Micro Processing Unit), GPU (Graphics Processing Unit), microprocessor, processor core, multiprocessor, ASIC (Application-Specific Integrated Circuit), FPGA (Field Programmable Gate Array), etc. The processor P may realize each processing by a logic circuit or dedicated circuit formed on, for example, an IC (Integrated Circuit) chip or LSI (Large Scale Integration). Multiple processing may be realized by one or more integrated circuits, or may be realized by one integrated circuit.

The information processing apparatus 100 transforms a target velocity of the end effector 12, the target velocity included in a signal received from the user interface 30, into target velocities of the respective joints JT1 to JT6. As a result of the joints JT1 to JT6 operating at their respective target velocities, the robotic arm 11 can move the end effector 12 at its target velocity. The velocity of a joint JT includes the operating direction of the joint JT and the operating speed of the joint JT in the operating direction. The rotational angle of a revolute joint and the linear position of a prismatic joint are each represented by a phase relative to the joint, and the velocity of the joint is obtained by differentiating the phase with respect to time. Hereinafter, the phase of a joint JT is represented by $\theta$, and the velocity of the joint JT is represented by a velocity $\theta va$. The velocities $\theta va1$ to $\theta va6$ of the respective joints JT1 to JT6 are represented by a velocity vector $\theta_V$ ($\theta_V = [\theta va1, \theta va2, \theta va3, \theta va4, \theta va5, \theta va6]$).

The control program stored in the memory M includes a matrix J called a Jacobian matrix. An inverse matrix $J^{-1}$ of the Jacobian matrix J is used for target velocity transformation. The Jacobian matrix J is a matrix that transforms small displacements of the joints JT1 to JT6 into small displacements of the position and orientation of the end effector 12.

As shown in FIG. 1 and FIG. 2, the position and orientation of the mechanical interface surface of the link L6 are represented as the position and orientation of the end effector 12. The position and orientation of the mechanical interface surface are represented by coordinates in a robot coordinate system $\Sigma$ (X, Y, Z), which is defined with respect to the robot 10. As a non-limiting example, in the present embodiment, the robot coordinate system $\Sigma$ (X, Y, Z) has its origin at a connection between the platform 13 and a supporting surface S supporting the platform 13, and includes an X-axis and a Y-axis that extend along the supporting surface S and are perpendicular to each other and a Z-axis that is perpendicular to both the X-axis and the Y-axis.

The position of the mechanical interface surface is represented by coordinates x, y, and z in the robot coordinate system $\Sigma$ (X, Y, Z), corresponding to the origin of a mechanical interface coordinate system $\Sigma$ (Xm, Ym, Zm), which is defined with respect to the mechanical interface surface. For example, the origin of the mechanical interface coordinate system $\Sigma$ (Xm, Ym, Zm) is positioned at the center of the mechanical interface surface. The orientation of the mechanical interface surface is represented by angles $r_O$, $r_A$, and $r_T$ formed by the mechanical interface coordinate system $\Sigma$ (Xm, Ym, Zm) relative to the robot coordinate system $\Sigma$ (X, Y, Z). The angles $r_O$, $r_A$, and $r_T$ may be represented by a roll angle, a pitch angle, and a yaw angle, respectively, and may also be represented by Euler angles. The velocity of the end effector 12 is represented by elements $x_v$, $y_v$, $z_v$, $\omega_x$, $\omega_y$, and $\omega_z$, and is, for example, represented by a velocity vector $V = [x_v, y_v, z_v, \omega_x, \omega_y, \omega_z]$. Here, $[x_v, y_v, z_v]$ represents a translational velocity vector, and $x_v$, $y_v$, and $z_v$ represent velocities in X-axis, Y-axis, and Z-axis directions, respectively, in the robot coordinate system $\Sigma$ (X, Y, Z). Also, $[\omega_x, \omega_y, \omega_z]$ represents an angular velocity vector, and $\omega_x$, $\omega_y$, and $\omega_z$ represent angular velocities about the X-, Y-, and Z-axes, respectively, in the robot coordinate system $\Sigma$ (X, Y, Z). The velocity vector V of the end effector 12, the velocity vector $\theta_v$ of the joints JT1 to JT6, and the Jacobian matrix J satisfy the following relationship equation: $\theta_v = J^{-1}V$.

The information processing apparatus 100 operates in accordance with the control program, and determines the target velocities of the respective joints JT1 to JT6 by using the above relationship equation and the target velocity of the end effector 12. Further, the information processing apparatus 100 determines electric current values to be applied to the respective motors M1 to M6 to cause the joints JT1 to JT6 to operate at their respective target velocities, and outputs the electric current values to the power control circuit 200. The information processing apparatus 100 performs numerical control of the robot 10 based on the relationship equation of $\theta_v = J^{-1}V$. That is, the information processing apparatus 100 performs resolved motion rate control using the Jacobian matrix.

It should be noted that the Jacobian matrix J includes, in its elements, the phases $\theta$ of the respective joints JT as variables. The information processing apparatus 100 calculates the phases $\theta1$, $\theta2$, $\theta3$, $\theta4$, $\theta5$, and $\theta6$ of the joints JT1 to JT6 by using results of detection by the respective rotation sensors E, the results of detection being included in the feedback information, and calculates the Jacobian matrix J by using the calculated phases.

Further, the Jacobian matrix J is a matrix dependent on the specifications of the robot 10, and can be calculated by using information about the specifications of the robot 10. The information processing apparatus 100, upon receiving the information about the specifications of the robot 10 from another device such as the user interface 30, stores the received information in the memory M. The information processing apparatus 100 operates in accordance with the control program, calculates the Jacobian matrix J by using the phases $\theta1$, $\theta2$, $\theta3$, $\theta4$, $\theta5$, and $\theta6$ of the joints JT1 to JT6, which are based on the feedback information, and the information about the specifications of the robot 10, and stores the calculated Jacobian matrix J in the memory M. Further, the information processing apparatus 100 applies the target velocity of the end effector 12 to the inverse matrix $J^{-1}$ of the Jacobian matrix J to determine the target velocities of the respective joints JT1 to JT6.

Accordingly, even if the robot 10 connected to the controller 20 is changed, the information processing apparatus 100 can calculate the Jacobian matrix J suitable for the changed robot 10 by obtaining information about the specifications of the changed robot 10, and can perform resolved motion rate control corresponding to the changed robot 10.

The robotic arm 11 of the robot 10 has singularities, each of which is a posture where the robotic arm 11 cannot be controlled in accordance with the calculation using the Jacobian matrix J. When the posture of the robotic arm 11 is at a singularity, the robotic arm 11 cannot move the end effector 12 at a velocity corresponding to the target velocity outputted from the user interface 30. For example, at a singularity, the robotic arm 11 cannot generate the velocity of the end effector 12 in a particular direction. Accordingly, near a singularity, the robotic arm 11 requires excessively high velocities of some or all of the joints JT1 to JT6 in order to generate the velocity of the end effector 12 in the particular direction. Therefore, the information processing apparatus 100 determines the excessively high velocities required of the joints JT1 to JT6 as errors, and stops the joints JT1 to JT6 from operating. Or, near a singularity, the robotic arm 11 may not be able to achieve sufficient velocities of the joints JT1 to JT6 to generate the velocity of the end effector 12 in the particular direction, and the trajectory of the end effector 12 may deviate from an originally commanded trajectory. Also, at a singularity, the robotic arm 11 may perform self-motion, in which the robotic arm 11 stops moving a part thereof, such as the end effector 12, and operates while maintaining the position of the stopped part. Near a singularity, the robotic arm 11 may move the end effector 12 at a velocity that changes rapidly relative to the target velocity as the robotic arm 11 approaches the singularity.

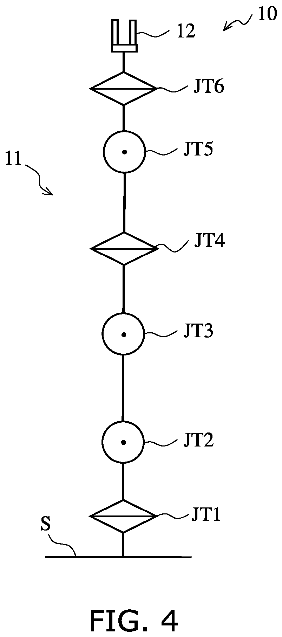

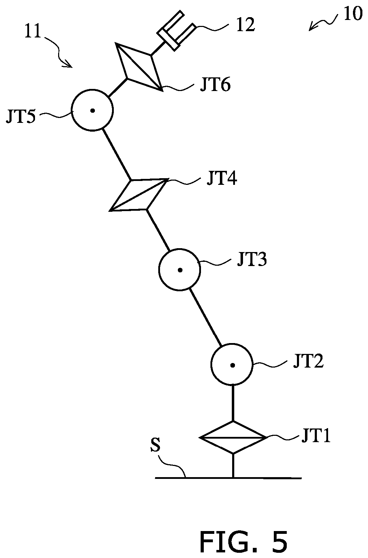

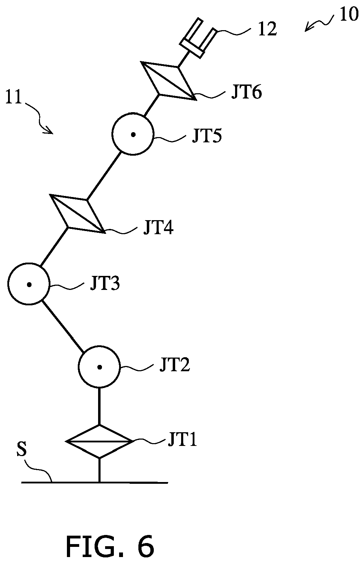

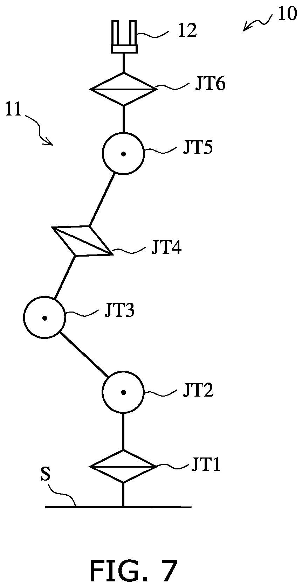

FIG. 4 to FIG. 7 are conceptual diagrams each showing one example of a posture of the robotic arm 11 at a singularity. FIG. 4 shows the robotic arm 11 in a fully stretched posture, in which the joints JT1 to JT6 are aligned in a straight line. FIG. 5 to FIG. 7 each show a posture of the robotic arm 11, in which two or more of the joints JT1 to JT6 are aligned in a straight line. In FIG. 5, the joints JT2 to JT4, including the joint JT3 serving as an elbow joint of the robotic arm 11, are aligned in a straight line. Such a posture of the robotic arm 11 is often referred to as an elbow singular posture. In FIG. 6, the joints JT3 to JT6, including the joint JT5 serving as a wrist pitch joint of the robotic arm 11, are aligned in a straight line. Such a posture of the robotic arm 11 is often referred to as a wrist singular posture. In FIG. 7, the joints JT1 and JT2 serving as shoulder joints of the robotic arm 11 and the joint JT5 are aligned in a straight line. Such a posture of the robotic arm 11 is often referred to as a shoulder singular posture.

At a singularity, the inverse matrix of the Jacobian matrix J does not exist, and the determinant of the Jacobian matrix J, denoted as det J, is 0. As the robotic arm 11 approaches a singularity, the determinant det J approaches 0. Since the inverse matrix of the Jacobian matrix J includes 1/det J in all of its elements, as the determinant det J approaches 0, the velocities of the joints JT diverge, and the velocity of the end effector 12 may become an unintended velocity.

[Operation of Information Processing Apparatus 100]

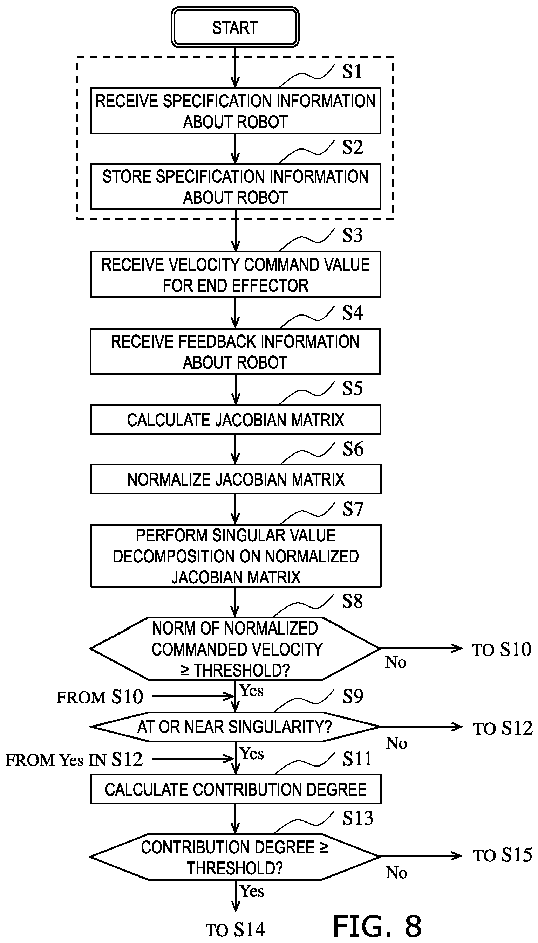

The information processing apparatus 100 performs control to reduce unintended motion of the robotic arm 11 at or near a singularity. FIG. 8 to FIG. 12 are flowcharts showing one example of singularity-related processing performed by the information processing apparatus 100 according to the embodiment.

The processing in steps S1 and S2 described below is preprocessing performed before controlling the robot 10 in accordance with a commanded velocity of the end effector 12, the commanded velocity being outputted from the user interface 30. The processing in step S3 and the subsequent steps relates to the control of the robot 10.

In step S1, a user of the robot system 1 inputs information about the specifications of the robot 10 to the user interface 30. The user interface 30 transmits the information, and the controller 20 receives the transmitted information.

Next, in step S2, the information processing apparatus 100 of the controller 20 stores the information about the specifications of the robot 10 in the memory M.

In step S3, the operator of the robot system 1 inputs an operation to the user interface 30 to perform manipulation control of the robot 10. The user interface 30 transmits a signal indicating a velocity command value for the end effector 12 to the controller 20, the velocity command value being commanded by the inputted operation. The information processing apparatus 100 obtains, from the signal, the velocity command value, which is the target velocity of the end effector 12. In this example, the velocity command value is represented by the velocity vector V. In a case where the velocity command value is not the velocity vector V, the information processing apparatus 100 may transform the velocity command value into the velocity vector V. For example, the information processing apparatus 100 may obtain, from the signal received from the user interface 30, the velocity command value for the end effector 12 every predetermined sampling period.

Next, in step S4, the information processing apparatus 100 receives, as feedback information, electric current values applied to the respective motors M1 to M6 of the joints JT1 to JT6, the electric current values being received from the power control circuit 200, and results of detection by the respective rotation sensors E, the results of detection being received from the respective motors M1 to M6. For example, the information processing apparatus 100 may obtain the feedback information every predetermined sampling period.

Next, in step S5, the information processing apparatus 100 calculates the phases $\theta1$, $\theta2$, $\theta3$, $\theta4$, $\theta5$, and $\theta6$ of the joints JT1 to JT6 by using the results of detection by the respective rotation sensors E, the results of detection being included in the feedback information. The information processing apparatus 100 calculates the Jacobian matrix J by using the phases $\theta1$, $\theta2$, $\theta3$, $\theta4$, $\theta5$, and $\theta6$ and the information about the specifications of the robot 10, the information being stored in the memory M. The Jacobian matrix J is one example of a first Jacobian matrix. Accordingly, the order of these steps S4 and S5 may be reversed.

Next, in step S6, the information processing apparatus 100 normalizes the Jacobian matrix J.

Here, the velocity vector $V = [x_v, y_v, z_v, \omega_x, \omega_y, \omega_z]$ of the end effector 12 can be normalized to a velocity vector $V_{Ne}$ as shown in Equation 1 below. The velocity vector $\theta_v = [\theta va1, \theta va2, \theta va3, \theta va4, \theta va5, \theta va6]$ of the joints JT1 to JT6 can be normalized to a velocity vector $\theta_{vN}$ as shown in Equation 2 below. Here, $vi_{max}$ is a maximum value preset for the i-th element $vi$ of the velocity vector V, and $\theta vai_{max}$ is a maximum value preset for the i-th element $\theta vai$ of the velocity vector $\theta_v$. These maximum values $vi_{max}$ and $\theta vai_{max}$ may be set based on the specifications of the robot 10. Coefficients $d_v$ and $d_{\theta v}$ are correction coefficients satisfying $1 \le d_v \le m$ and $1 \le d_{\theta v} \le n$, respectively. A number m is the number of dimensions of the velocity vector V. In this example, m is 6. A number n is the number of dimensions of the velocity vector $\theta_v$. In this example, n is 6. The robotic arm 11 is a non-redundant manipulator. Hereinafter, m = n, and both "m" and "n" are represented by "n". The velocity vector V and the velocity vector $V_{Ne}$ are examples of a movement command value, and the velocity vector $\theta_v$ and the velocity vector $\theta_{vN}$ are examples of an operation command value.

[Math. 1]

$$V_{Ne} = \frac{1}{\sqrt{d_v}} \, diag\left(v_{i_{max}}^{-1}\right) V = W_{V_{Ne}} V$$

(Equation 1)

$$\theta_{vN} = \frac{1}{\sqrt{d_{\theta_v}}} \, diag\left(\theta_{vai_{max}}^{-1}\right) \theta_v = W_{\theta_{vN}} \theta_v$$

(Equation 2)

It should be noted that, in the velocity vector V, $[x_v, y_v, z_v]$ can be represented as a translational vector vl, and $[\omega_x, \omega_y, \omega_z]$ can be represented as an angular velocity vector $\omega$. The translational vector vl and the angular velocity vector $\omega$ have different units from each other. Accordingly, as shown in Equation 3 below, the velocity vector V may be normalized to a velocity vector $V_N$ by using the maximum norm $\|v1\|_{max}$ of the translational vector vl and the maximum norm $\|\omega 1\|_{max}$ of the angular velocity vector $\omega$. In this example, the correction coefficient $d_v$ satisfies $1 \leq d_v \leq 2$. $I_3$ is a 3×3 identity matrix.

[Math. 2]

$$V_N = \frac{1}{\sqrt{d_v}} \begin{bmatrix} \frac{vl}{\|vl\|_{max}} \\ \frac{\omega}{\|\omega\|_{max}} \end{bmatrix} V = \frac{1}{\sqrt{d_v}} \begin{bmatrix} \frac{1}{\|vl\|_{max}} I_3 & 0 \\ 0 & \frac{1}{\|\omega\|_{max}} I_3 \end{bmatrix} V = W_{V_N} V$$

(Equation 3)

Then, the Jacobian matrix J can be normalized by using the normalized velocity vector $V_{Ne}$ or $V_N$ and the normalized velocity vector $\theta_{vN}$. The Jacobian matrix J satisfies the relationship of $V = J\theta_v$. By using the relationship, Equation 2, and Equation 3, the Jacobian matrix J can be normalized to a Jacobian matrix $J_N$ as shown in Equation 4 below. The normalized Jacobian matrix $J_N$ is $W_{vN}JW_{\theta vN}^{-1}$. Hereinafter, a normalized velocity vector may also be referred to as a normalized velocity command value, a normalized commanded velocity, a velocity command value, or a commanded velocity.

[Math. 3]

$$\begin{aligned} V_N &= W_{V_N} V = W_{V_N} J \theta_v \\ &= W_{V_N} J W_{\theta_{vN}}^{-1} W_{\theta_{vN}} \theta_v = W_{V_N} J W_{\theta_{vN}}^{-1} \theta_{vN} \\ &= J_N \theta_{vN} \end{aligned}$$

(Equation 4)

In a case where the upper limit value of the velocity vector V of the end effector 12 is properly set, the norm $\|V_N\|$ of the normalized velocity vector $V_N$ satisfies $\|V_N\| \leq 1$. Accordingly, if the maximum value of the joint velocity of each joint is properly set, the norm $\|\theta_{vN}\|$ of the normalized velocity vector $\theta_{vN}$ satisfies $\|\theta_{vN}\| \leq 1$, and the robotic arm 11 can be caused to operate in accordance with the velocity command value for the end effector 12, which is outputted from the user interface 30.

Therefore, in step S6, the information processing apparatus 100 normalizes the velocity command value V for the end effector 12 in accordance with Equation 1 or Equation 3 to calculate the normalized velocity vector $V_{Ne}$ or $V_N$. Further, the information processing apparatus 100 applies the normalized velocity vector $V_{Ne}$ or $V_N$ and the Jacobian matrix J to such a relationship as $J_N = W_{vN}JW_{\theta vN}^{-1}$ to calculate the normalized Jacobian matrix $J_N$, and stores the calculated normalized Jacobian matrix $J_N$ in the memory M.

Subsequently, in step S7, as shown in Equation 5 below, the information processing apparatus 100 performs singular value decomposition on the normalized Jacobian matrix $J_N$ to generate a matrix set M1 including three matrices Uv, $\Sigma$, and Ve. The matrix Uv is an orthonormal matrix, and column vectors $u_{vi}$ (i = 1, ..., n) of the matrix Uv are basis vectors of the velocity space of the end effector 12, which is defined by the singular value decomposition. The matrix $V_\theta$ is an orthonormal matrix, and row vectors $v_{\theta i}$ (i = 1, ..., n) of a transposed matrix $V_\theta^T$, which are column vectors of the matrix $V_\theta$, are basis vectors of the velocity space of the plurality of joints JT, which is defined by the singular value decomposition. The matrix $\Sigma$ is a diagonal matrix, and its diagonal elements are singular values $\sigma i$ (i = 1, ..., n). In the matrix $\Sigma$, the diagonal elements are arranged in descending order as $\sigma_1 > \sigma_2 > ... > \sigma_n$. The "n" for the column vectors $u_{vi}$ is the number of dimensions of the velocity of the end effector 12, and the "n" for the row vectors $v_{\theta i}$ is the number of dimensions of the velocities of the plurality of joints JT. The closer the posture of the robotic arm 11 is to a singularity, the smaller is the smallest singular value $\sigma_n$. The matrix set M1 is one example of a second Jacobian matrix. The matrix $V_\theta^T$ is one example of a first matrix; the matrix Uv is one example of a second matrix; and the matrix $\Sigma$ is one example of a first singular matrix. The vectors $v_{\theta i}$ are one example of first basis vectors, and the vectors $u_{vi}$ are one example of second basis vectors.

[Math. 4]

$$J_N = U_V \Sigma V_\theta^T = [u_{V1}, \cdots, u_{Vn}] \begin{bmatrix} \sigma_1 & \cdots & 0 \\ \vdots & \ddots & \vdots \\ 0 & \cdots & \sigma_n \end{bmatrix} \begin{bmatrix} v_{\theta 1}^T \\ \vdots \\ v_{\theta n}^T \end{bmatrix} = M_1$$

(Equation 5)

It should be noted that in a case where the posture of the robotic arm 11 does not correspond to a singularity, i.e., a non-singular state, the inverse matrix of the normalized Jacobian matrix $J_N$, that is, the inverse matrix of the matrix set M1, is expressed as shown in Equation 6 below. The inverse matrix of the matrix set M1 is one example of a second inverse Jacobian matrix. The matrix $V_\theta$ is one example of a first transformation matrix; the matrix $U_V^T$ is one example of a second transformation matrix; and the matrix $\Sigma^{-1}$ is one example of a first transformation singular matrix.

[Math. 5]

$$J_N^{-1} = M_1^{-1} = V_\theta \Sigma^{-1} U_V^T$$
$$= [v_{\theta 1}, \cdots, v_{\theta n}] \begin{bmatrix} 1/\sigma_1 & \cdots & 0 \\ \vdots & \ddots & \vdots \\ 0 & \cdots & 1/\sigma_n \end{bmatrix} \begin{bmatrix} u_{V1}^T \\ \vdots \\ u_{Vn}^T \end{bmatrix}$$

(Equation 6)

The velocity command value V for the end effector 12 can be normalized to the velocity vector $V_N$ by using Equation 1. The normalized velocity vector $V_N$ can be expressed, using its norm $\|V_N\|$ and a unit vector $u_N$ of the normalized velocity vector $V_N$, as shown in Equation 7 below.

[Math. 6]

$$V_N = \|V_N\| u_N$$

(Equation 7)

The velocity vector $\theta_{vN}$ is obtained by normalizing the velocity vector $\theta_v$ of the joints JT1 to JT6 for moving the end effector 12 in accordance with the velocity command value V, and can be expressed as shown in Equation 8 below by using Equation 6 and Equation 7.

[Math. 7]

$$\theta_{vN} = J_N^{-1} V_N$$
$$= \|V_N\| [v_{\theta 1}, \cdots, v_{\theta n}] \begin{bmatrix} 1/\sigma_1 & \cdots & 0 \\ \vdots & \ddots & \vdots \\ 0 & \cdots & 1/\sigma_n \end{bmatrix} \begin{bmatrix} u_{V1}^T \\ \vdots \\ u_{Vn}^T \end{bmatrix} u_N$$

(Equation 8)

When the posture of the robotic arm 11 approaches a singularity, it is possible that the norm $\|\theta_{vN}\|$ of the normalized velocity vector $\theta_{vN}$ does not satisfy $\|\theta_{vN}\| \leq 1$. Accordingly, by modifying the normalized velocity vector $\theta_{vN}$ of Equation 8 to a normalized velocity vector $\theta_{vN1}$ as shown in Equation 9 below, $\|\theta_{vN1}\| \leq 1$ is ensured. Therefore, in order to generate a command value for the operation of the robotic arm 11, the normalized velocity vector $\theta_{vN1}$ can be used instead of the normalized velocity vector $\theta_{vN}$, and thereby resolved motion rate control in accordance with Equation 8 can be modified to resolved motion rate control in accordance with Equation 9.

[Math. 8]

$$\theta_{vN1} = \|V_N\| \frac{J_N^{-1} u_N}{\|J_N^{-1} u_N\|}$$

(Equation 9)

Next, in step S8, the information processing apparatus 100 determines whether or not the norm $\|V_N\|$ of the normalized commanded velocity $V_N$ is greater than or equal to a threshold $\varepsilon_V$. In a case where the norm $\|V_N\|$ is greater than or equal to the threshold $\varepsilon_V$ (Yes in step S8), the information processing apparatus 100 proceeds to step S9, whereas in a case where the norm $\|V_N\|$ is less than the threshold $\varepsilon_V$ (No in step S8), the information processing apparatus 100 proceeds to step S10. In a case where the magnitude of the normalized velocity vector $V_N$ is too small such that the norm $\|V_N\|$ is less

than the threshold $\varepsilon_V$, the normalization calculation $u_N = V_N/\|V_N\|$ based on Equation 7 to calculate the unit vector $u_N$ becomes numerically unstable. Therefore, the information processing apparatus 100 does not accept a velocity command value whose norm $\|V_N\|$ is less than the threshold $\varepsilon_V$, and treats it as 0.

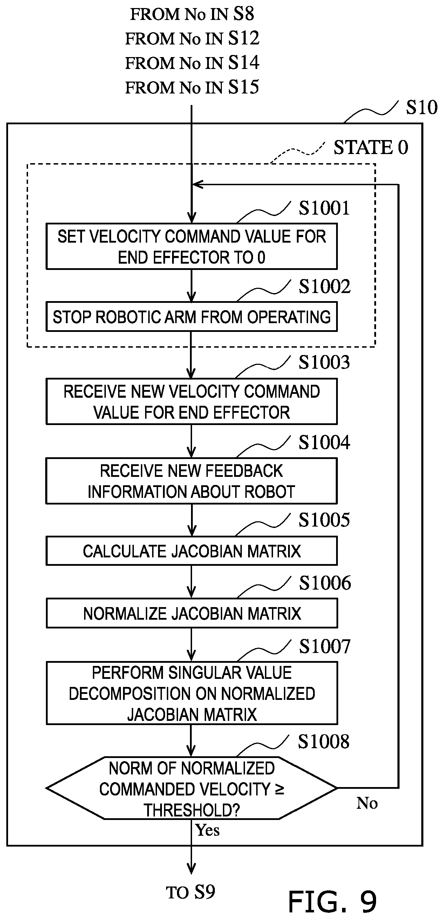

In step S10, the information processing apparatus 100 performs resolved motion rate control according to a state 0, in which the velocity command value V for the end effector 12 is set to 0. As shown in FIG. 9, step S10 includes steps S1001 to S1008, the details of which will be described below.

In step S9, the information processing apparatus 100 determines whether or not the posture of the robotic arm 11 is at a singularity or in a near-singularity region. In a case where the posture of the robotic arm 11 is at a singularity or in a near-singularity region (Yes in step S9), the information processing apparatus 100 proceeds to step S11, whereas in a case where the posture of the robotic arm 11 is neither at a singularity nor in a near-singularity region (No in step S9), the information processing apparatus 100 proceeds to step S12.

As the posture of the robotic arm 11 approaches a singularity, $1/\sigma_n$ in Equation 8 increases, and eventually the numerical calculation of the inverse matrix of the Jacobian matrix becomes impossible. Therefore, in step S9, the information processing apparatus 100 performs processing based on a result of comparison between the smallest singular value $\sigma_n$ and a threshold $\varepsilon_{\sigma n}$. In a case where $\sigma_n < \varepsilon_{\sigma n}$, the information processing apparatus 100 determines that the posture of the robotic arm 11 is at a singularity or in a near-singularity region, whereas in a case where $\sigma_n \geq \varepsilon_{\sigma n}$, the information processing apparatus 100 determines that the posture of the robotic arm 11 is neither at a singularity nor in a near-singularity region. The threshold $\varepsilon_{\sigma n}$ is one example of a first threshold.

The threshold $\varepsilon_{\sigma n}$ is a non-zero value set for the smallest singular value $\sigma_n$. For example, the threshold $\varepsilon_{\sigma n}$ may be set based on an empirical rule for the smallest singular value $\sigma_n$ such that the norm $\|\theta_{vN}\|$ of the normalized velocity vector $\theta_{vN}$ expressed as shown in Equation 8 satisfies $\|\theta_{vN}\| > 1$.

The threshold $\varepsilon_{\sigma n}$ may be set based on a condition number $\kappa$, which is defined as $\kappa = \sigma_1/\sigma_n$. For example, a threshold $1/\kappa_0$ can be set for the reciprocal of the condition number $\kappa$, i.e., $1/\kappa (= \sigma_n/\sigma_1)$. The threshold $\varepsilon_{\sigma n}$ can be set with reference to $1/\kappa_0$. For example, the threshold $\varepsilon_{\sigma n}$ can be set as $\varepsilon_{\sigma n} = \sigma_1/\kappa_0$.

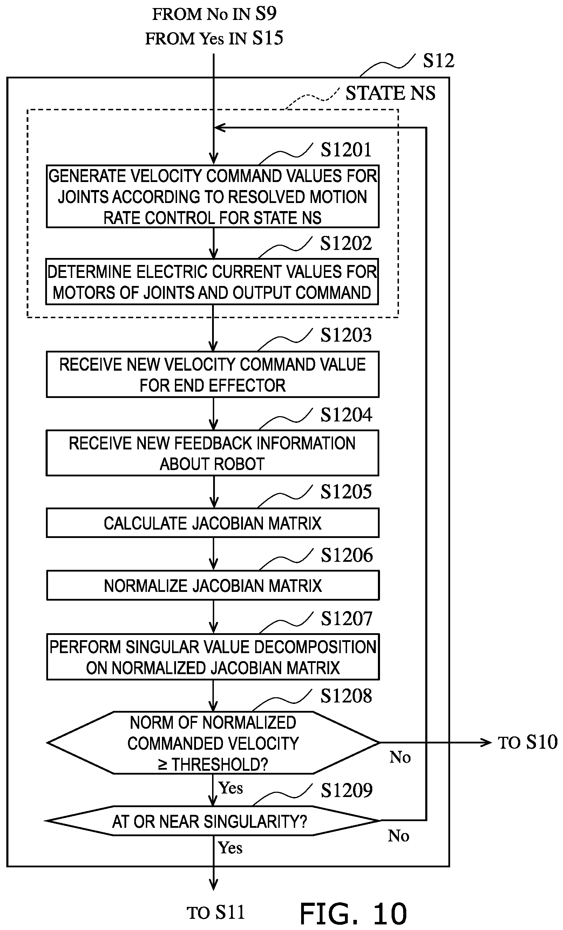

In step S12, the information processing apparatus 100 performs resolved motion rate control according to a state NS (Non-Singular), which is normal-state resolved motion rate control. As shown in FIG. 10, step S12 includes steps S1201 to S1209, the details of which will be described below.

In step S11, based on Equation 8, the information processing apparatus 100 calculates a contribution degree $w_n$ of the normalized commanded velocity vector $V_N$ of the end effector 12 in the direction of the basis vector $u_{vn}$ of the velocity space of the end effector 12, as shown in Equation 10 below. The vector $u_N$ is a unit vector of the normalized velocity vector $V_N$. The contribution degree $w_n$ falls within the range of $0 \leq w_n \leq 1$. The contribution degree $w_n$ indicates the degree to which the direction of the commanded velocity of the end effector 12 contributes to a directional component of the velocity of the end effector 12, the directional component being unrealizable by the robotic arm 11 in a state of singularity. The closer the contribution degree $w_n$ is to 1, the greater is the degree of the contribution.

[Math. 9]

$$w_n = \frac{|u_{Vn}^T V_N|}{\|V_N\|} = |u_{Vn}^T u_N|$$

(Equation 10)

Next, in step S13, the information processing apparatus 100 determines whether or not the contribution degree $w_n$ is greater than or equal to a threshold $\varepsilon_{wn}$. In a case where the contribution degree $w_n$ is greater than or equal to the threshold $\varepsilon_{wn}$ (Yes in step S13), the information processing apparatus 100 proceeds to step S14, whereas in a case where the contribution degree $w_n$ is less than the threshold $\varepsilon_{wn}$ (No in step S13), the information processing apparatus 100 proceeds to step S15. The threshold $\varepsilon_{wn}$ is set within the range of $0 < \varepsilon_{wn} < 1$. The threshold $\varepsilon_{wn}$ is one example of a third threshold.

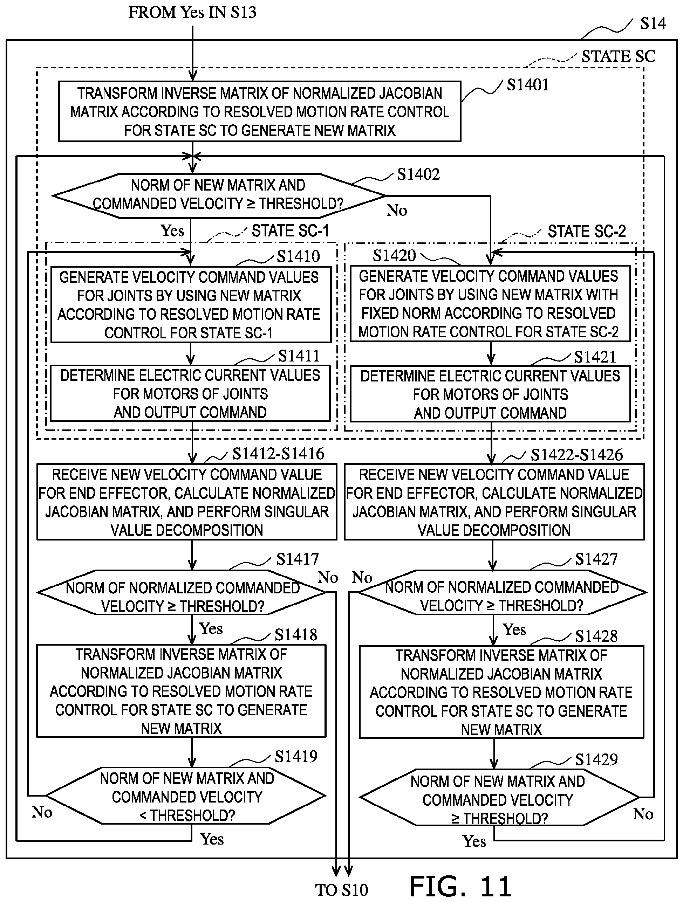

In step S14, the information processing apparatus 100 performs resolved motion rate control according to a state SC (Singularity Consistent). The resolved motion rate control according to the state SC is that performed in a state where the contribution degree at a singularity or in a near-singularity region is greater than or equal to the threshold. As shown in FIG. 11, step S14 includes steps S1401 to S1429, the details of which will be described below.

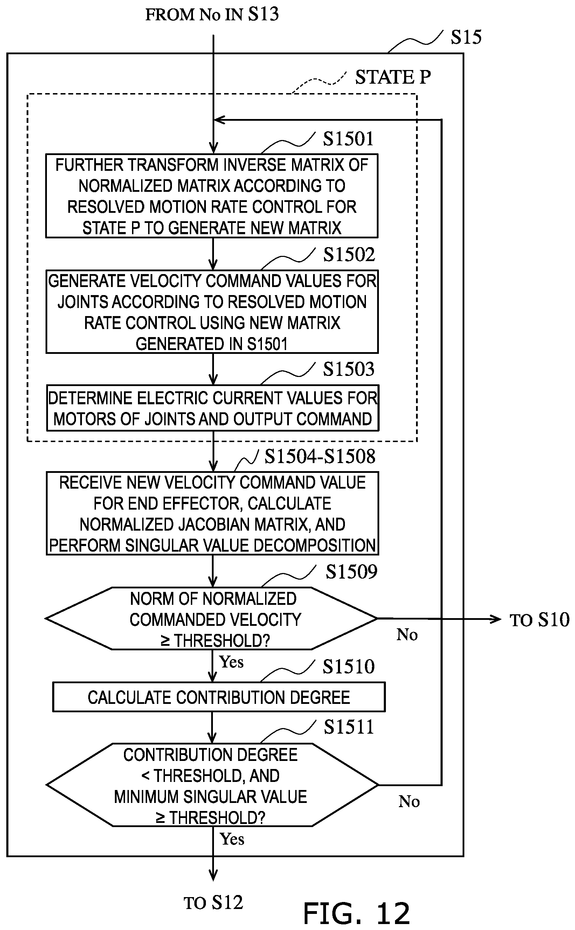

In step S15, the information processing apparatus 100 performs resolved motion rate control according to a state P (Perpendicular). The resolved motion rate control according to the state P is that performed in a state where the contribution degree at a singularity or in a near-singularity region is less than the threshold. As shown in FIG. 12, step S15 includes steps S1501 to S1511, the details of which will be described below.

Hereinafter, step S10 relating to the state 0 is described in detail with reference to FIG. 9. First, in step S1001, the information processing apparatus 100 sets the velocity command value V for the end effector 12 to 0; determines a velocity command value to stop the joints JT1 to JT6 from operating; and outputs, to the power control circuit 200, a command value to stop the rotation of the motors M1 to M6 of the joints JT1 to JT6.

Next, in step S1002, the power control circuit 200 stops the rotation of the motors M1 to M6 to stop the robotic arm 11 from operating.

Then, in step S1003, similar to step S3, the information processing apparatus 100 obtains a new velocity command value for the end effector 12 from a signal received from the user interface 30.

Subsequently, in step S1004, similar to step S4, the information processing apparatus 100 obtains new feedback information about the robot 10.

Next, in step S1005, similar to step S5, the information processing apparatus 100 calculates the Jacobian matrix J by using the new velocity command value and the new feedback information.

Then, in step S1006, similar to step S6, the information processing apparatus 100 normalizes the Jacobian matrix J.

Subsequently, in step S1007, similar to step S7, the information processing apparatus 100 performs singular value decomposition on the normalized Jacobian matrix $J_N$.

Next, in step S1008, similar to step S8, the information processing apparatus 100 determines whether or not the norm $\|V_N\|$ of the normalized commanded velocity $V_N$ is greater than or equal to the threshold $\varepsilon_V$. In a case where the norm $\|V_N\|$ is greater than or equal to the threshold $\varepsilon_V$ (Yes in step S1008), the information processing apparatus 100 proceeds to step S9, whereas in a case where the norm $\|V_N\|$ is less than the threshold $\varepsilon_V$ (No in step S1008), the information processing apparatus 100 returns to step S1001, and repeats the processing in step S1001 and the subsequent steps.

Hereinafter, step S12 relating to the state NS is described in detail with reference to FIG. 10. First, in step S1201, the information processing apparatus 100 generates velocity command values for the respective joints JT1 to JT6 through processing according to the resolved motion rate control for the state NS. The information processing apparatus 100 normalizes the velocity command value V for the end effector 12 to the velocity vector $V_N$ in accordance with Equation 3. Further, the information processing apparatus 100 applies the normalized velocity vector $V_N$ to Equation 9 to calculate the normalized velocity vector $\theta_{vN1}$ of the joints JT1 to JT6. The information processing apparatus 100 calculates a velocity command value $\theta_v$ for the joints JT1 to JT6 by transforming the normalized velocity vector $\theta_{vN1}$ back into the unnormalized velocity vector. Consequently, the velocities of the respective joints JT1 to JT6 are ensured to be less than or equal to upper limit velocities set for the respective joints JT1 to JT6.

It should be noted that the information processing apparatus 100 may generate the velocity command value $\theta_v$ for the joints JT1 to JT6 by applying the velocity command value V for the end effector 12 to the inverse matrix of the Jacobian matrix J in accordance with the relationship equation of $\theta_v = J^{-1}V$.

Next, in step S1202, by using differences between the velocities of the joints JT1 to JT6 and the velocity command value $\theta_v$, the velocities of the joints JT1 to JT6 being obtained from the results of detection by the rotation sensors E, the results of detection being included in the feedback information, and also using the electric current values applied to the respective motors M1 to M6, the electric current values being included in the feedback information, the information processing apparatus 100 determines electric current values to be applied to the respective motors M1 to M6 to cause the joints JT1 to JT6 to operate in accordance with the velocity command value $\theta_v$. The information processing apparatus 100 outputs a command of the determined electric current values to the power control circuit 200, and the power control circuit 200 drives the motors M1 to M6 in accordance with these respective electric current values, thereby causing the robotic arm 11 to operate.

Next, in step S1203, similar to step S1003, the information processing apparatus 100 obtains a new velocity command value for the end effector 12 from a signal received from the user interface 30.

Then, in steps S1204 to S1207, the information processing apparatus 100 performs processing similar to that of steps S1004 to S1007 by using the new velocity command value.

Subsequently, in step S1208, similar to step S1008, the information processing apparatus 100 determines whether or not the norm $\|V_N\|$ of the normalized commanded velocity $V_N$ is greater than or equal to the threshold $\varepsilon_V$. In a case where the norm $\|V_N\|$ is greater than or equal to the threshold $\varepsilon_V$ (Yes in step S1208), the information processing apparatus 100 proceeds to step S1209, whereas in a case where the norm $\|V_N\|$ is less than the threshold $\varepsilon_V$ (No in step S1208), the information processing apparatus 100 proceeds to step S1001 of step S10.

Next, in step S1209, similar to step S9, the information processing apparatus 100 determines whether or not the posture of the robotic arm 11 is at a singularity or in a near-singularity region. In a case where the posture of the robotic arm 11 is at a singularity or in a near-singularity region (Yes in step S1209), the information processing apparatus 100 proceeds to step S11, whereas in a case where the posture of the robotic arm 11 is neither at a singularity nor in a near-singularity region (No in step S1209), the information processing apparatus 100 returns to step S1201, and repeats the processing in step S1201 and the subsequent steps.

Hereinafter, step S14 relating to the state SC is described in detail with reference to FIG. 11. First, in step S1401, the information processing apparatus 100 performs processing according to resolved motion rate control for the state SC. The information processing apparatus 100 transforms the inverse matrix $J_N^{-1}$ of the normalized Jacobian matrix $J_N$, which is shown in Equation 6, to calculate a new matrix $J_{\varepsilon N}$ as shown in Equation 11 below. The matrix $J_{\varepsilon N}$ is also a normalized matrix. Specifically, the information processing apparatus 100 multiplies all the elements of the matrix $\Sigma^{-1}$ in the inverse matrix $J_N^{-1}$ of Equation 6 by $\sigma_n/\varepsilon_{\sigma n}$ so as to maintain the ratios among the singular value elements $1/\sigma_1, ..., 1/\sigma_n$ included in the inverse matrix $J_N^{-1}$. The elements $1/\sigma_i$ (i = 1, ..., n) are modified to $\sigma_n/\sigma_i\varepsilon_{\sigma n}$. Further, $\sigma_n/\sigma_i\varepsilon_{\sigma n}$ is denoted as $1/\sigma_i'$. The matrix $J_{\varepsilon N}$ is one example of a third inverse Jacobian matrix, and the inverse matrix of the matrix $J_{\varepsilon N}$ is one example of a third Jacobian matrix. The transformation from the inverse matrix $J_N^{-1}$ into the matrix $J_{\varepsilon N}$ is one example of a first transformation, and $\sigma_n/\varepsilon_{\sigma n}$ is one example of a first ratio.

[Math. 10]

$$J_{\varepsilon N} = V_\theta \begin{bmatrix} 1/\sigma'_1 & \cdots & & 0 \\ \vdots & \ddots & & \vdots \\ & & 1/\sigma'_{n-1} & \\ 0 & \cdots & & 1/\varepsilon_{\sigma n} \end{bmatrix} U_V^T \qquad \text{(Equation 11)}$$

Here, for example, based on Equation 11, similar to Equation 9, the information processing apparatus 100 can perform processing according to resolved motion rate control as shown in Equation 12 below. At a singularity or in a near-singularity region, the information processing apparatus 100 can generate a normalized velocity vector $\theta_{vNA}$ corresponding to the velocity command values for the respective joints JT1 to JT6 based on the normalized velocity vector $V_N$ corresponding to the velocity command value for the end effector 12. The norm $\|\theta_{vNA}\|$ of the normalized velocity vector $\theta_{vNA}$ is ensured to be $\|\theta_{vNA}\| \leq 1$.

[Math. 11]

$$\boldsymbol{\theta}_{vNA} = \|V_N\| \frac{J_{\varepsilon N}\boldsymbol{u}_N}{\|J_{\varepsilon N}\boldsymbol{u}_N\|} \qquad \text{(Equation 12)}$$

In the case of a singular state where the posture of the robotic arm 11 corresponds to a singularity, the matrix $J_{\varepsilon N}$ of Equation 12 is a matrix as shown in Equation 13 below. This corresponds to the null space that causes self-motion of the robotic arm 11 at the singularity.

[Math. 12]

$$J_{\varepsilon N} = V_\theta \begin{bmatrix} 0 & \cdots & & 0 \\ \vdots & \ddots & & \vdots \\ & & 0 & \\ 0 & \cdots & & 1/\varepsilon_{\sigma n} \end{bmatrix} U_V^T \qquad \text{(Equation 13)}$$

In the resolved motion rate control in accordance with Equation 12, if the norm $\|J_{\varepsilon N}u_N\|$ becomes excessively small, the normalization may become unstable in terms of numerical calculation. This corresponds to a state in which, as the robotic arm 11 approaches a singular state, $1/\sigma_i'$ (i = 1, ..., n-1) in Equation 12 approaches 0, and the contribution degree $w_n$ approaches 0. For example, in a case where the contribution degree $w_n$ is 0 in a singular state, the norm $\|J_{\varepsilon N}u_N\|$ is 0.

Accordingly, in step S1402, the information processing apparatus 100 determines whether or not the norm $\|J_{\varepsilon N}u_N\|$ of the normalized matrix $J_{\varepsilon N}$ and the normalized commanded velocity vector $V_N$ of the end effector 12 is greater than or equal to a threshold $\kappa_\theta$. The threshold $\kappa_\theta$ is a threshold set for the norm of the product of the unit vector $u_N$ of the normalized velocity vector $V_N$ of the end effector 12 and the normalized matrix $J_{\varepsilon N}$. In a case where the norm $\|J_{\varepsilon N}u_N\|$ is greater than or equal to the threshold $\kappa_\theta$ (Yes in step S1402), the information processing apparatus 100 proceeds to step S1410, whereas in a case where the norm $\|J_{\varepsilon N}u_N\|$ is less than the threshold $\kappa_\theta$ (No in step S1402), the information processing apparatus 100 proceeds to step S1420. The threshold $\kappa_\theta$ is one example of a second threshold, and the norm $\|J_{\varepsilon N}u_N\|$ is one example of a second norm.

In step S1410, the information processing apparatus 100 performs processing according to resolved motion rate control for a state SC-1. The information processing apparatus 100 generates velocity command values for the respective joints JT1 to JT6 according to resolved motion rate control shown in Equation 12 using the matrix $J_{\varepsilon N}$. Similar to step S1201, the information processing apparatus 100 normalizes the velocity command value V for the end effector 12 to the velocity vector $V_N$. Further, the information processing apparatus 100 applies the normalized velocity vector $V_N$ to Equation 12 to calculate the normalized velocity vector $\theta_{vNA}$ of the joints JT1 to JT6. The singular value elements, which are the diagonal elements of the matrix $J_{\varepsilon N}$ in Equation 11, do not diverge even when the robotic arm 11 approaches a singular

state. The norm $\|\theta_{vNA}\|$ of the velocity vector $\theta_{vNA}$ satisfies $\|\theta_{vNA}\| \leq 1$.

Further, in the matrix $J_{\varepsilon N}$ of Equation 11, the ratios among the singular value elements, which are the diagonal elements, maintain the ratios among the singular value elements included in the inverse matrix $J_N^{-1}$ of the normalized Jacobian matrix $J_N$. Accordingly, the direction in which the robotic arm 11 moves the end effector 12 as a result of the joints JT1 to JT6 operating in accordance with the normalized velocity vector $\theta_{vNA}$ does not change from the direction in which the robotic arm 11 moves the end effector 12 as a result of the joints JT1 to JT6 operating in accordance with the normalized velocity vector $\theta_{vN}$ calculated in step S1201 of the resolved motion rate control for the state NS. Therefore, the robotic arm 11 can move the end effector 12 in the direction of the commanded velocity of the end effector 12 without causing, near a singularity, the end effector 12 to deviate from its target trajectory and without coming to a sudden stop due to an error in which a joint velocity exceeds its upper limit value at the singularity.

Next, in step S1411, similar to step S1202, the information processing apparatus 100 determines electric current values to be applied to the respective motors M1 to M6 to cause the joints JT1 to JT6 to operate in accordance with the respective velocity command values. The information processing apparatus 100 outputs a command of the determined electric current values to the power control circuit 200, and the power control circuit 200 drives the motors M1 to M6 in accordance with these respective electric current values, thereby causing the robotic arm 11 to operate.

Then, in steps S1412 to S1416, similar to steps S1203 to S1207, the information processing apparatus 100 obtains a new velocity command value for the end effector 12 from a signal received from the user interface 30, calculates the normalized Jacobian matrix $J_N$, and performs singular value decomposition.

Subsequently, in step S1417, similar to step S1208, the information processing apparatus 100 determines whether or not the norm $\|V_N\|$ of the normalized commanded velocity $V_N$ is greater than or equal to the threshold $\varepsilon_V$. In a case where the norm $\|V_N\|$ is greater than or equal to the threshold $\varepsilon_V$ (Yes in step S1417), the information processing apparatus 100 proceeds to step S1418, whereas in a case where the norm $\|V_N\|$ is less than the threshold $\varepsilon_V$ (No in step S1417), the information processing apparatus 100 proceeds to step S1001 of step S10.

In step S1418, similar to step S1401, the information processing apparatus 100 transforms the inverse matrix $J_N^{-1}$ of the normalized Jacobian matrix $J_N$ calculated in steps S1412 to S1416 to calculate a new matrix $J_{\varepsilon N}$.

Next, in step S1419, the information processing apparatus 100 determines whether or not the norm $\|J_{\varepsilon N}u_N\|$ of the normalized matrix $J_{\varepsilon N}$ and the normalized commanded velocity vector $V_N$ of the end effector 12 is less than the threshold $\kappa_\theta$. In a case where the norm $\|J_{\varepsilon N}u_N\|$ is less than the threshold $\kappa_\theta$ (Yes in step S1419), the information processing apparatus 100 returns to step S1402, and repeats the processing in step S1402 and the subsequent steps, whereas in a case where the norm $\|J_{\varepsilon N}u_N\|$ is greater than or equal to the threshold $\kappa_\theta$ (No in step S1419), the information processing apparatus 100 returns to step S1410, and repeats the processing in step S1410 and the subsequent steps.

In step S1420, the information processing apparatus 100 performs processing according to resolved motion rate control for a state SC-2. The information processing apparatus 100 performs processing according to resolved motion rate control that is shown not in Equation 12 but in Equation 14. In Equation 14, the norm $\|J_{\varepsilon N}u_N\|$ is replaced with the threshold $\kappa_\theta$, thereby being fixed as a constant. This suppresses instability in the numerical calculation of the joint velocities in a case where the norm $\|J_{\varepsilon N}u_N\|$ is excessively small. The information processing apparatus 100 generates velocity command values for the respective joints JT1 to JT6 according to the resolved motion rate control shown in Equation 14, in which the matrix $J_{\varepsilon N}$ is used and the norm $\|J_{\varepsilon N}u_N\|$ is fixed.

[Math. 13]

$$\boldsymbol{\theta}_{vNB} = \|\boldsymbol{V}_N\| \frac{J_{\varepsilon_N}\boldsymbol{u}_N}{\kappa_\theta} \qquad \text{(Equation 14)}$$

Similar to step S1410, the information processing apparatus 100 applies the normalized velocity vector $V_N$ of the velocity command value V for the end effector 12 to Equation 14 to calculate a normalized velocity vector $\theta_{vNB}$ of the joints JT1 to JT6. Each of the elements of the normalized velocity vector $\theta_{vNB}$ indicates a velocity corresponding to the magnitude of the norm $\|J_{\varepsilon N}u_N\|$. As the norm $\|J_{\varepsilon N}u_N\|$ decreases, the elements of the normalized velocity vector $\theta_{vNB}$ continuously and gradually reduce the velocities of the joints JT1 to JT6.

The norm $\|\theta_{vNB}\|$ of the normalized velocity vector $\theta_{vNB}$ satisfies $\|\theta_{vNB}\| \leq 1$. Further, similar to step S1410, the direction in which the robotic arm 11 moves the end effector 12 as a result of the joints JT1 to JT6 operating in accordance with the normalized velocity vector $\theta_{vNB}$ does not change from the moving direction, of the end effector 12, that accords with the normalized velocity vector $\theta_{vN}$ calculated in step S1201 of the resolved motion rate control for the state NS. Therefore, the robotic arm 11 can move the end effector 12 in the direction of the commanded velocity of the end effector 12 without causing, near a singularity, the end effector 12 to deviate from its target trajectory and without coming to a sudden stop due to an error in which a joint velocity exceeds its upper limit value at the singularity.

Next, in step S1421, similar to step S1411, the information processing apparatus 100 determines electric current values to be applied to the respective motors M1 to M6 to cause the joints JT1 to JT6 to operate in accordance with the respective velocity command values. The information processing apparatus 100 outputs a command of the determined electric current values to the power control circuit 200, and the power control circuit 200 drives the motors M1 to M6 in accordance with these respective electric current values, thereby causing the robotic arm 11 to operate.

Then, in steps S1422 to S1426, similar to steps S1412 to S1416, the information processing apparatus 100 obtains a new velocity command value for the end effector 12 from a signal received from the user interface 30, calculates the normalized Jacobian matrix $J_N$, and performs singular value decomposition.

Subsequently, in step S1427, similar to step S1417, in a case where the norm $\|V_N\|$ of the normalized commanded velocity $V_N$ is greater than or equal to the threshold $\varepsilon_V$ (Yes in step S1427), the information processing apparatus 100 proceeds to step S1428, whereas in a case where the norm $\|V_N\|$ is less than the threshold $\varepsilon_V$ (No in step S1427), the information processing apparatus 100 proceeds to step S1001 of step S10.

In step S1428, similar to step S1418, the information processing apparatus 100 transforms the inverse matrix $J_N^{-1}$ of the normalized Jacobian matrix $J_N$ calculated in steps S1422 to S1426 to calculate a new matrix $J_{\varepsilon N}$.

Next, in step S1429, the information processing apparatus 100 determines whether or not the norm $\|J_{\varepsilon N}u_N\|$ of the normalized matrix $J_{\varepsilon N}$ and the normalized commanded velocity vector $V_N$ of the end effector 12 is greater than or equal to the threshold $\kappa_\theta$. In a case where the norm $\|J_{\varepsilon N}u_N\|$ is greater than or equal to the threshold $\kappa_\theta$ (Yes in step S1429), the information processing apparatus 100 returns to step S1402, and repeats the processing in step S1402 and the subsequent steps, whereas in a case where the norm $\|J_{\varepsilon N}u_N\|$ is less than the threshold $\kappa_\theta$ (No in step S1429), the information processing apparatus 100 returns to step S1420, and repeats the processing in step S1420 and the subsequent steps.

Hereinafter, step S15 relating to the state P is described in detail with reference to FIG. 12. First, in step S1501, the information processing apparatus 100 generates a new matrix $J_{\varepsilon NA}$, which is a matrix obtained by transforming the normalized matrix $J_{\varepsilon N}$ of Equation 11 of step S1401 and which is shown in Equation 15 below. The matrix $J_{\varepsilon NA}$ is also a normalized matrix. In the above transformation, an element $1/\varepsilon_{\sigma n}$ of the normalized matrix $J_{\varepsilon N}$ is replaced with 0. The matrix $J_{\varepsilon NA}$ is one example of a fourth inverse Jacobian matrix.

[Math. 14]

$$J_{\varepsilon NA} = V_\theta \begin{bmatrix} 1/\sigma'_1 & \cdots & & 0 \\ \vdots & \ddots & & \vdots \\ & & 1/\sigma'_{n-1} & \\ 0 & \cdots & & 0 \end{bmatrix} U_V^T \qquad \text{(Equation 15)}$$

When the contribution degree $w_n$ is less than the threshold $\varepsilon_{wn}$ and sufficiently small, among the directional components of the commanded velocity of the end effector 12, the directional component of the velocity of the end effector 12 that cannot be generated due to a singular state is very small. Such a directional component of the velocity is a velocity component associated with the singular value element $1/\varepsilon_{\sigma n}$. For example, in a case where the normalized velocity vector $\theta_{vNA}$ is generated using the normalized matrix $J_{\varepsilon N}$ of Equation 11 of step S1401, although the normalized velocity vector $\theta_{vNA}$ can realize the movement of the end effector 12 in the direction of the commanded velocity of the end effector 12, it is realized such that the magnitude of the velocity of the end effector 12 is very low.

On the other hand, in a case where the contribution degree $w_n$ is 0, among the directional components of the commanded velocity of the end effector 12, the directional component of the velocity of the end effector 12 that cannot be generated due to a singular state does not exist. That is, the commanded velocity in the direction of the singular value element $1/\varepsilon_{\sigma n}$ does not exist. Accordingly, in the above transformation, the element $1/\varepsilon_{\sigma n}$, which is associated with the directional component of the velocity of the end effector 12 that cannot be generated due to a singular state, is set to 0 when the contribution degree $w_n$ is sufficiently small. By truncating such a directional component in this manner, the commanded velocity of the end effector 12 can be realized as it is.

By Equation 15, the commanded velocity in the direction of the singular value element $1/\varepsilon_{\sigma n}$ is treated as nonexistent. This corresponds to modifying the normalized velocity vector $V_N$, which corresponds to the commanded velocity of the end effector 12, to a new velocity vector $V_{NA}$ as shown in Equation 16 below.

[Math. 15]

$$V_{NA} = V_N - u_{Vn}^T V_N u_{Vn} \qquad \text{(Equation 16)}$$

Next, in step S1502, the information processing apparatus 100 generates velocity command values for the respective joints JT1 to JT6 according to resolved motion rate control shown in Equation 17 below, in which the normalized

matrix $J_{\varepsilon NA}$ is used. Similar to step S1201, the information processing apparatus 100 applies the normalized velocity vector $V_N$ of the velocity command value V for the end effector 12 to Equation 17 to calculate a normalized velocity vector $\theta_{vNC}$ of the joints JT1 to JT6.

[Math. 16]

$$\boldsymbol{\theta}_{vNC} = \|\boldsymbol{V}_N\| \frac{\boldsymbol{J}_{\varepsilon NA}\boldsymbol{u}_N}{\|\boldsymbol{J}_{\varepsilon NA}\boldsymbol{u}_N\|}$$

(Equation 17)

The normalized velocity vector $\theta_{vNC}$ corresponds to velocity command values for the robotic arm 11, whose velocity dimensionality is reduced and which is no longer in a singular state as a result of, in the commanded velocity (the hand-end velocity) of the end effector 12, reducing the number of dimensions of the hand-end velocity by one by treating the velocity component in the direction of the singular value element $1/\varepsilon_{\sigma n}$ as nonexistent. Therefore, even when the robotic arm 11 is in a singular state, the normalized velocity vector $\theta_{vNC}$ allows the commanded velocity of the end effector 12 to be approximately realized by the robotic arm 11. Further, the norm $\|\theta_{vNC}\|$ of the normalized velocity vector $\theta_{vNC}$ satisfies $\|\theta_{vNC}\| \leq 1$. Therefore, the robotic arm 11 can move the end effector 12 in the direction of the commanded velocity of the end effector 12 without causing, near a singularity, the end effector 12 to deviate from its target trajectory and without coming to a sudden stop due to an error in which a joint velocity exceeds its upper limit value at the singularity. After step S1502, the information processing apparatus 100 proceeds to step S1503.

Here, as a result of an operation performed on the user interface 30 by the operator, the direction of the commanded velocity of the end effector 12 may change, and the contribution degree $w_n$ may decrease from a state of being greater than or equal to the threshold $\varepsilon_{wn}$ to a state of being less than the threshold $\varepsilon_{wn}$. When the contribution degree $w_n$ is in the state of being greater than or equal to the threshold $\varepsilon_{wn}$, for example, the robotic arm 11 moves the end effector 12 at a velocity according to the normalized velocity vector $\theta_{vNA}$ of Equation 12 of step S1401 or at a velocity according to the normalized velocity vector $\theta_{vNB}$ of Equation 14 of step S1420. At the time, as the contribution degree $w_n$ decreases, the velocity of the end effector 12 decreases. Further, when the contribution degree $w_n$ has become less than the threshold $\varepsilon_{wn}$, the robotic arm 11 moves the end effector 12 at a velocity according to the normalized velocity vector $\theta_{vNC}$ of Equation 17.

As described above, the normalized velocity vector $\theta_{vNC}$ corresponds to velocity command values for the robotic arm 11, whose number of velocity dimensions is reduced by one and which is no longer in a singular state, and the normalized velocity vector $\theta_{vNC}$ allows the commanded velocity of the end effector 12 to be approximately realized. Accordingly, at a timing when the contribution degree $w_n$ falls below the threshold $\varepsilon_{wn}$, a transition from the state SC to the state P may occur, causing the end effector 12 of the robotic arm 11 to suddenly move at a certain velocity. However, as it is understood from FIG. 10 to FIG. 12, in order to transition from the state SC to the state P, it is necessary to first transition to either the state 0 or the state NS from the state SC before transitioning to the state P, and thus the end effector 12 is prevented from suddenly starting to move in the aforementioned manner. Further, the information processing apparatus 100 can notify the operator of a velocity change to urge the operator to make an adjustment to the operation on the user interface 30.

In step S1503, similar to step S1202, the information processing apparatus 100 determines electric current values to be applied to the respective motors M1 to M6 to cause the joints JT1 to JT6 to operate in accordance with the respective velocity command values. The information processing apparatus 100 outputs a command of the determined electric current values to the power control circuit 200, and the power control circuit 200 drives the motors M1 to M6 in accordance with these respective electric current values, thereby causing the robotic arm 11 to operate.

Next, in steps S1504 to S1508, similar to steps S1203 to S1207, the information processing apparatus 100 obtains a new velocity command value for the end effector 12 from a signal received from the user interface 30, calculates the normalized Jacobian matrix $J_N$, and performs singular value decomposition.

Then, in step S1509, similar to step S1208, in a case where the norm $\|V_N\|$ of the normalized commanded velocity $V_N$ is greater than or equal to the threshold $\varepsilon_V$ (Yes in step S1509), the information processing apparatus 100 proceeds to step S1510, whereas in a case where the norm $\|V_N\|$ is less than the threshold $\varepsilon_V$ (No in step S1509), the information processing apparatus 100 proceeds to step S1001 of step S10.

In step S1510, regarding the velocity command value V for the end effector 12 obtained in steps S1504 to S1508, similar to step S11, the information processing apparatus 100 calculates the contribution degree $w_n$ of the normalized commanded velocity vector $V_N$ of the end effector 12 in the direction of the basis vector $u_{vn}$ associated with the smallest singular value $\sigma_n$.

Next, in step S1511, the information processing apparatus 100 determines whether or not the following conditions are satisfied: the smallest singular value $\sigma_n$ obtained by the singular value decomposition in steps S1504 to S1508 is greater than or equal to the threshold $\varepsilon_{\sigma n}$; and the contribution degree $w_n$ is less than the threshold $\varepsilon_{wn}$. In a case where all of these conditions are satisfied (Yes in step S1511), the information processing apparatus 100 proceeds to step S12, whereas in a case where at least one of these conditions is not satisfied (No in step S1511), the information processing apparatus 100 returns to step S1501, and repeats the processing in step S1501 and the subsequent steps. When all of these conditions are satisfied, a velocity component in the velocity command value V for the end effector 12, the velocity component being in the direction associated with the smallest singular value $\sigma_n$, is small, and the smallest singular value $\sigma_n$ does not correspond to a singular state. Accordingly, the robotic arm 11 can get out of the state P.

Through steps S3 to S15, the information processing apparatus 100 can control, while transitioning the resolved motion rate control method among the state 0, the state NS, the state SC, and the state P, the robotic arm 11 such that the robotic arm 11 moves the end effector 12 in the direction of the commanded velocity of the end effector 12 without causing, near a singularity, the end effector 12 to deviate from its target trajectory and without coming to a sudden stop due to an error in which a joint velocity exceeds its upper limit value at the singularity.

The state 0 is a state where the commanded velocity of the end effector 12 is less than a threshold and where the robotic arm 11 is stopped by treating the velocity command value for the end effector 12 as 0. The state NS is a state where velocity command values for the respective joints JT can be generated by conventional resolved motion rate control. The state SC is a state where velocity command values for the respective joints JT can be generated by resolved motion rate control that corresponds to the state of the robotic arm 11 that is either being close to a singular state or being in a singular state. The state P is a state where velocity command values for the respective joints JT can be generated by resolved motion rate control that corresponds to a state where the commanded velocity of the end effector 12 has been adjusted not to include a component in the commanded direction $u_{vn}$ corresponding to the singular value $\sigma_n$.

The information processing apparatus 100 determines a transition of resolved motion rate control between the state NS and the state SC based on whether the relationship between the smallest singular value $\sigma_n$ and the threshold $\varepsilon_{\sigma n}$ is $\sigma_n \geq \varepsilon_{\sigma n}$ or $\sigma_n < \varepsilon_{\sigma n}$. For example, if $\sigma_n < \varepsilon_{\sigma n}$ and the contribution degree $w_n$ satisfies $w_n \geq \varepsilon_{wn}$, the information processing apparatus 100 determines to make a transition to the resolved motion rate control for the state SC. Accordingly, continuity of transition between the state NS and the state SC is maintained. Further, in the state SC, the information processing apparatus 100 determines a transition of resolved motion rate control between the two states based on whether the relationship between the norm $\|J_{\varepsilon N}u_N\|$ and the threshold $\kappa_\theta$ is $\|J_{\varepsilon N}u_N\| \geq \kappa_\theta$ or $\|J_{\varepsilon N}u_N\| < \kappa_\theta$. In each of these two states, the information processing apparatus 100 performs the resolved motion rate control in such a manner that the norm $\|J_{\varepsilon N}u_N\|$ does not fall below the threshold $\kappa_\theta$. Accordingly, continuity of transition between the two states is maintained.

The information processing apparatus 100 can determine a transition between the state NS and the state P based on whether the relationship between the contribution degree $w_n$ and the threshold $\varepsilon_{wn}$ is $w_n \geq \varepsilon_{wn}$ or $w_n < \varepsilon_{wn}$. If $w_n < \varepsilon_{wn}$ and the relationship between the smallest singular value $\sigma_n$ and the threshold $\varepsilon_{\sigma n}$ satisfies $\sigma_n < \varepsilon_{\sigma n}$, the information processing apparatus 100 makes a transition from the resolved motion rate control for the state NS to the resolved motion rate control for the state P, and removes, from the commanded velocity of the end effector 12, the component in the commanded direction $u_{vn}$ corresponding to the singular value $\sigma_n$. Here, by setting the threshold $\varepsilon_{wn}$ to a small value, continuity of transition between the two states is maintained.

In the state P, since the component in the commanded direction $u_{vn}$ is removed from the commanded velocity of the end effector 12, even if the contribution degree $w_n$ in the commanded velocity of the end effector 12 satisfies the relationship $w_n \geq \varepsilon_{wn}$, the velocity of the end effector 12 actually commanded to the robotic arm 11 is one from which the component in the direction $u_{vn}$ is removed. Accordingly, in a case where both $w_n < \varepsilon_{wn}$ and $\sigma_n \geq \varepsilon_{\sigma n}$ are satisfied, the information processing apparatus 100 makes a transition from the resolved motion rate control for the state P to the resolved motion rate control for the state NS. In this case, continuity of transition between the two states is maintained.

The information processing apparatus 100 does not allow a direct transition between the state SC and the state P. To make a transition from the state SC to the state P, first, the commanded velocity of the end effector 12 is set to 0, thereby transitioning to the state 0 to temporarily stop the robotic arm 11, and thereafter, by outputting such a velocity command value for the end effector 12 that the contribution degree $w_n$ satisfies the relationship $w_n < \varepsilon_{wn}$, a transition to the state P can be made. It should be noted that, alternatively, the information processing apparatus 100 may first transition to the resolved motion rate control for the state NS, and thereafter transition to the resolved motion rate control for the state P.

On the other hand, to make a transition from the state P to the state SC, first, the commanded velocity of the end effector 12 is set to 0, thereby transitioning to the state 0 to temporarily stop the robotic arm 11, and thereafter, by outputting such a velocity command value for the end effector 12 that the contribution degree $w_n$ satisfies the relationship $w_n \geq \varepsilon_{wn}$, a transition to the state SC can be made. It should be noted that, alternatively, the information processing apparatus 100 may first transition from the resolved motion rate control for the state P to the resolved motion rate control for the state NS, and thereafter transition to the resolved motion rate control for the state SC.

[Verification of Assurance of Upper Limit of Moving Velocity of End Effector 12]

In steps S1 to S15, the information processing apparatus 100 processes the normalized velocity vector $\theta_{vN}$ such that the magnitude of the norm $\|\theta_{vN}\|$ of the normalized velocity vector $\theta_{vN}$ corresponding to the velocity command values for the respective joints JT satisfies $\|\theta_{vN}\| \leq 1$. However, depending on the posture of the robotic arm 11, it is possible that the magnitude of the velocity of the end effector 12 realized by the velocity command value obtained by denormalizing the normalized velocity vector $\theta_{vN}$ exceeds the upper limit of the commanded velocity of the end effector 12. Accordingly, for the normalized velocity vectors of the joints JT, which are respectively obtained from Equation 9, Equation 12, Equation 14, and Equation 17, verification is made as to the assurance of the upper limit of the moving velocity of the end effector 12.

First, in the state SC, in the case of the normalized velocity vector $\theta_{vN1}$ obtained from Equation 9, the normalized velocity vector $V_{NR}$ of the end effector 12 realized by the normalized velocity vector $\theta_{vN1}$ is obtained as shown in Equation 18 below. Further, as shown in Equation 19 below, it is possible that the norm $\|V_{NR}\|$ of the normalized velocity vector $V_{NR}$ becomes greater than the norm $\|V_N\|$ of the normalized commanded velocity vector $V_N$ of the end effector 12.

[Math. 17]

$$V_{NR} = J_N \theta_{vN1} \qquad \text{(Equation 18)}$$

$$\|V_{NR}\| = \|J_N \theta_{vN1}\| > \|V_N\| \qquad \text{(Equation 19)}$$

In this case, the normalized velocity vector $\theta_{vN1}$ can be corrected by Equation 20 shown below. The norm $\|V_{NR}\|$ is one example of a first norm, and the corrected normalized velocity vector $\theta_{vN1}$ is one example of a corrected operation command value.

[Math. 18]

$$\theta_{vN1} = \frac{\|V_N\|}{\|J_N \theta_{vN1}\|} \theta_{vN1} \qquad \text{(Equation 20)}$$

It should be noted that Equation 21 shown below is obtained from Equation 9, and Equation 22 shown below is obtained from Equation 21. Further, by applying Equation 22 and Equation 9 to Equation 20, Equation 23 shown below is obtained.

[Math. 19]

$$J_N \theta_{vN1} = \|V_N\| \frac{u_N}{\|J_N^{-1} u_N\|} \qquad \text{(Equation 21)}$$

$$\|J_N \theta_{vN1}\| = \frac{\|V_N\|}{\|J_N^{-1} u_N\|} \qquad \text{(Equation 22)}$$

$$\theta_{vN1} = \|V_N\| J_N^{-1} u_N = J_N^{-1} V_N \qquad \text{(Equation 23)}$$

Accordingly, the corrected normalized velocity vector $\theta_{vN1}$ obtained from Equation 20 corresponds to the normalized velocity vector of the joints JT that is obtained by applying conventional resolved motion rate control to the normalized commanded velocity vector $V_N$ of the end effector 12. Therefore, it can be confirmed that the norm $\|V_{NR}\|$ is less than or equal to the norm $\|V_N\|$.

Next, in the state SC, in the case of the normalized velocity vector $\theta_{vNA}$ obtained from Equation 12, the normalized velocity vector $V_{NRA}$ of the end effector 12 realized by the normalized velocity vector $\theta_{vNA}$ is obtained as shown in Equation 24 below. Further, as shown in Equation 25 below, it is possible that the norm $\|V_{NRA}\|$ of the normalized velocity vector $V_{NRA}$ becomes greater than the norm $\|V_N\|$ of the normalized commanded velocity vector $V_N$ of the end effector 12.

[Math. 20]

$$V_{NRA} = J_N \theta_{vNA} \quad \text{(Equation 24)}$$

$$\|V_{NRA}\| = \|J_N \theta_{vNA}\| > \|V_N\| \quad \text{(Equation 25)}$$

In this case, the normalized velocity vector $\theta_{vNA}$ can be corrected as shown in Equation 26 below. The norm $\|V_{NRA}\|$ is one example of the first norm, and the corrected normalized velocity vector $\theta_{vNA}$ is one example of the corrected operation command value.

[Math. 21]

$$\theta_{vNA} = \frac{\|V_N\|}{\|J_N \theta_{vNA}\|} \theta_{vNA} \quad \text{(Equation 26)}$$

The normalized matrix $J_{\varepsilon N}$ of Equation 12 satisfies a relationship expressed in Equation 27 below with respect to the inverse matrix $J_N^{-1}$ of the normalized Jacobian matrix $J_N$. Equation 28 shown below is obtained from Equation 26 and Equation 27. Accordingly, the corrected normalized velocity vector $\theta_{vNA}$ obtained from Equation 26 corresponds to the normalized velocity vector of the joints JT that is obtained by applying conventional resolved motion rate control to the normalized commanded velocity vector $V_N$ of the end effector 12. Therefore, it can be confirmed that the norm $\|V_{NRA}\|$ is less than or equal to the norm $\|V_N\|$.

[Math. 22]

$$J_N^{-1} = \frac{\varepsilon_{\sigma n}}{\sigma_n} J_{\varepsilon N} \quad \text{(Equation 27)}$$

$$\theta_{vNA} = \|V_N\| \frac{\varepsilon_{\sigma n}}{\sigma_n} J_{\varepsilon N} u_N = J_N^{-1} V_N \quad \text{(Equation 28)}$$

Next, in the state SC, in the case of the normalized velocity vector $\theta_{vNB}$ obtained from Equation 14, the normalized velocity vector $V_{NRB}$ of the end effector 12 realized by the normalized velocity vector $\theta_{vNB}$ is obtained as shown in Equation 29 below. Further, as shown in Equation 30 below, it is possible that the norm $\|V_{NRB}\|$ of the normalized velocity vector $V_{NRB}$ becomes greater than the norm $\|V_N\|$ of the normalized commanded velocity vector $V_N$ of the end effector 12.

[Math. 23]

$$V_{NRB} = J_N \theta_{vNB} \quad \text{(Equation 29)}$$

$$\|V_{NRB}\| = \|J_N \theta_{vNB}\| > \|V_N\| \quad \text{(Equation 30)}$$

In this case, the normalized velocity vector $\theta_{vNB}$ can be corrected as shown in Equation 31 below. The norm $\|V_{NRB}\|$ is one example of the first norm, and the corrected normalized velocity vector $\theta_{vNB}$ is one example of the corrected operation command value.

[Math. 24]

$$\theta_{vNB} = \frac{\|V_N\|}{\|J_N \theta_{vNB}\|} \theta_{vNB} \quad \text{(Equation 31)}$$

The normalized matrix $J_{\varepsilon N}$ of Equation 14 satisfies a relationship expressed in Equation 27 with respect to the inverse matrix $J_N^{-1}$ of the normalized Jacobian matrix $J_N$. Equation 32 shown below is obtained from Equation 27 and Equation 31. Accordingly, the corrected normalized velocity vector $\theta_{vNB}$ obtained from Equation 31 corresponds to the normalized velocity vector of the joints JT that is obtained by applying conventional resolved motion rate control to the normalized commanded velocity vector $V_N$ of the end effector 12. Therefore, it can be confirmed that the norm $\|V_{NRB}\|$ is less than or equal to the norm $\|V_N\|$.

[Math. 25]

$$\boldsymbol{\theta}_{vNB} = \|V_N\| \frac{\varepsilon_{\sigma n}}{\sigma_n} J_{\varepsilon N} u_N = J_N^{-1} V_N \qquad \text{(Equation 32)}$$

Next, in the state P, in the case of the normalized velocity vector $\theta_{vNC}$ obtained from Equation 17, the normalized velocity vector $V_{NRC}$ of the end effector 12 realized by the normalized velocity vector $\theta_{vNC}$ is obtained as shown in Equation 33 below. Further, as shown in Equation 34 below, it is possible that the norm $\|V_{NRC}\|$ of the normalized velocity vector $V_{NRC}$ becomes greater than the norm $\|V_N\|$ of the normalized commanded velocity vector $V_N$ of the end effector 12.

[Math. 26]

$$V_{NRC} = J_N \boldsymbol{\theta}_{vNC} \qquad \text{(Equation 33)}$$

$$\|V_{NRC}\| = \|J_N \boldsymbol{\theta}_{vNC}\| > \|V_N\| \qquad \text{(Equation 34)}$$

In this case, the normalized velocity vector $\theta_{vNC}$ can be corrected as shown in Equation 35 below. The norm $\|V_{NRC}\|$ is one example of the first norm, and the corrected normalized velocity vector $\theta_{vNC}$ is one example of the corrected operation command value.

[Math. 27]

$$\boldsymbol{\theta}_{vNC} = \frac{\|V_N\|}{\|J_N \boldsymbol{\theta}_{vNC}\|} \boldsymbol{\theta}_{vNC} \qquad \text{(Equation 35)}$$

Equation 36 shown below is obtained from Equation 16, Equation 17, and Equation 27. Further, the norm $\|J_N \theta_{vNC}\|$ is obtained as shown in Equation 37 below.

[Math. 28]

$$J_N \boldsymbol{\theta}_{vNC} = \|V_N\| \frac{J_N J_{\varepsilon NA} u_N}{\|J_{\varepsilon NA} u_N\|} = \|V_N\| \frac{\sigma_n}{\varepsilon_{\sigma n}} \frac{(u_N - u_{Vn}^T u_N u_{Vn})}{\|J_{\varepsilon NA} u_N\|}$$

$$= \frac{\sigma_n}{\varepsilon_{\sigma n}} \frac{V_{NA}}{\|J_{\varepsilon NA} u_N\|} \qquad \text{(Equation 36)}$$

$$\|J_N \boldsymbol{\theta}_{vNC}\| = \frac{\sigma_n}{\varepsilon_{\sigma n}} \frac{\|V_{NA}\|}{\|J_{\varepsilon NA} u_N\|} \qquad \text{(Equation 37)}$$

Accordingly, Equation 38 shown below is obtained by substituting Equation 17 and Equation 37 into Equation 35.

[Math. 29]

$$\boldsymbol{\theta}_{vNC} = \frac{(\|\boldsymbol{V}_N\|)^2}{\|\boldsymbol{V}_{NA}\|} \frac{\varepsilon_{\sigma n}}{\sigma_n} \boldsymbol{J}_{\varepsilon NA} \boldsymbol{u}_N$$

$$= \frac{\|\boldsymbol{V}_N\|}{\|\boldsymbol{V}_{NA}\|} \frac{\varepsilon_{\sigma n}}{\sigma_n} \boldsymbol{V}_\theta \begin{bmatrix} 1/\sigma'_1 & \cdots & & 0 \\ \vdots & \ddots & & \vdots \\ & & 1/\sigma'_{n-1} & \\ 0 & \cdots & & 0 \end{bmatrix} \boldsymbol{U}_V^T \boldsymbol{V}_N$$

$$= \frac{\|\boldsymbol{V}_N\|}{\|\boldsymbol{V}_{NA}\|} \boldsymbol{V}_\theta \begin{bmatrix} 1/\sigma_1 & \cdots & & 0 \\ \vdots & \ddots & & \vdots \\ & & 1/\sigma_{n-1} & \\ 0 & \cdots & & 0 \end{bmatrix} \boldsymbol{U}_V^T \boldsymbol{V}_N = \frac{\|\boldsymbol{V}_N\|}{\|\boldsymbol{V}_{NA}\|} \boldsymbol{J}'_{\varepsilon NA} \boldsymbol{V}_N$$

(Equation 38)

In Equation 38, the normalized matrix $J'_{\varepsilon NA}$ is a pseudo-inverse matrix of the inverse matrix $J_N^{-1}$, the pseudo-inverse matrix being obtained by setting, in the inverse matrix $J_N^{-1}$ of the standard normalized Jacobian matrix $J_N$, the element $1/\sigma_n$ corresponding to the smallest singular value $\sigma_n$ to 0. The normalized matrix $J'_{\varepsilon NA}$ is similar to the normalized matrix $J_{\varepsilon NA}$. The corrected normalized velocity vector $\theta_{vNC}$ of the joints JT that is obtained from Equation 38 corresponds to the normalized velocity vector of the joints JT that is obtained by applying resolved motion rate control using such a pseudo-inverse matrix.

Since the state P, in which the normalized matrix $J'_{\varepsilon NA}$ is applied, is applied in a case where the contribution degree $w_n$ is less than the threshold $\varepsilon_{wn}$, the norm $\|V_{NA}\|$ is asymptotically equal to the norm $\|V_N\|$. Therefore, the influence of $\|V_N\|/\|V_{NA}\|$ can be ignored.

A solution obtained by the pseudo-inverse matrix $J'_{\varepsilon NA}$ yields the smallest norm among those that best realize the normalized commanded velocity vector $V_N$ of the end effector 12. Accordingly, the norm $\|V_{NRC}\|$ of the velocity of the end effector 12, which is realized by the normalized velocity vector $\theta_{vNC}$ of the joints JT obtained from Equation 38, has a magnitude that does not exceed the magnitude of the norm $\|V_N\|$ of the normalized commanded velocity vector $V_N$ of the end effector 12.

As described above, in both cases of the state SC and the state P, it can be confirmed that the magnitude of the velocity of the end effector 12 realized by the velocity command values for the respective joints JT1 to JT6, which are outputted by the information processing apparatus 100, does not exceed the magnitude of the commanded velocity of the end effector 12.

[Processing for Self-motion in Singular State]

In the Jacobian matrix J, there is a case where the smallest singular value $\sigma_n$ as shown in Equation 5 becomes 0. In such a case, the robotic arm 11 enters a complete singular state. The normalized Jacobian matrix $J_N$ at the time is expressed as shown in Equation 39 below.

[Math. 30]

$$\boldsymbol{J}_N = \boldsymbol{U}_V \boldsymbol{\Sigma} \boldsymbol{V}_\theta^T$$

$$= [u_{V1}, \cdots, u_{Vn}] \begin{bmatrix} \sigma_1 & \cdots & & 0 \\ \vdots & \ddots & & \vdots \\ & & \sigma_{n-1} & \\ 0 & \cdots & & 0 \end{bmatrix} \begin{bmatrix} v_{\theta 1}^T \\ \vdots \\ v_{\theta n}^T \end{bmatrix}$$

(Equation 39)

In a singular state, the basis vector $v_{\theta n}$ of the joints JT velocity space lies in the null space that, within the joints JT velocity space, does not affect the velocity of the end effector 12. Therefore, in a singular state, the information processing apparatus 100 outputs velocity command values for the respective joints JT in the null space with respect to the velocity command value in the direction of the vector $u_{Vn}$ included in the velocity command value V for the end effector 12. The operation of the robotic arm 11 in accordance with such velocity command values for the respective joints JT results in self-motion.

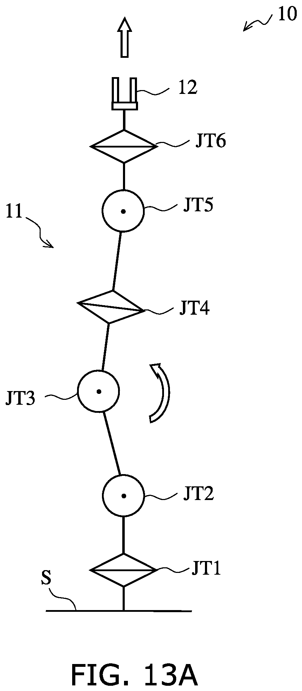

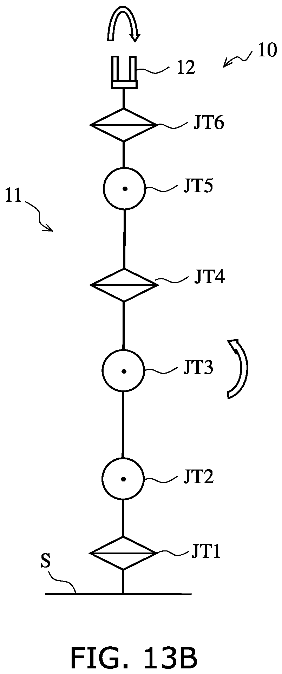

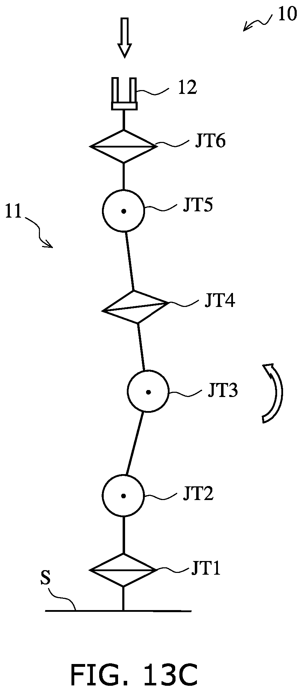

The robotic arm 11 can continue self-motion in the wrist singular posture and the shoulder singular posture shown in FIG. 6 and FIG. 7. In the elbow singular posture shown in FIG. 5, there is a case where the robotic arm 11 moves out of the singularity as a result of self-motion. In the case of an elbow singular posture, if the end effector 12 is continuously fed with a velocity command value in the direction of the vector $u_{Vn}$, the robotic arm 11 first reaches the singularity as shown in FIG. 13A to FIG. 13B, and then, as shown in FIG. 13C, moves out of the singularity by self-motion and moves the end effector 12 in a direction opposite to its target direction. Subsequently, the robotic arm 11 moves the end effector 12 toward the singularity again as shown in FIG. 13C, eventually reaching the state shown in FIG. 13B. Thereafter, the robotic arm 11 repeats the transition from the state shown in FIG. 13A to the state shown in FIG. 13C. As a result, a vibration phenomenon of the robotic arm 11 is induced. FIG. 13A to FIG. 13C are conceptual diagrams showing one example of self-motion of the robotic arm 11 in the case of an elbow singular posture.

To prevent such a vibration phenomenon, the information processing apparatus 100 temporarily stops the entire operation of the joints JT1 to JT6 of the robotic arm 11 at a point when the robotic arm 11 has reached the state shown in FIG. 13B. For example, if only the joint(s) JT associated with self-motion among the joints JT1 to JT6 of the robotic arm 11 is/are stopped to prevent the vibration phenomenon, the robotic arm 11 may move the end effector 12 in a direction different from the commanded velocity of the end effector 12. The information processing apparatus 100 prevents such movement of the end effector 12 in an unintended direction. Then, the information processing apparatus 100 causes the robotic arm 11 to operate in a manner to deviate from the elbow singular posture either in accordance with a command from the user interface 30 or autonomously. It should be noted that in a singular state other than an elbow singular posture, the information processing apparatus 100 may, after temporarily stopping the robotic arm 11, cause the robotic arm 11 to deviate from the singular state.

The information processing apparatus 100 can identify the type of a singular state of the robotic arm 11 based on geometric parameters used in Jacobian matrix calculation. The velocity command value V for the end effector 12, the velocity command value $\theta_v$ for the joints JT, and the Jacobian matrix J satisfy $V = J\theta_v$. This equation is further differentiated with respect to time to obtain Equation 40 shown below.
[Math. 31]

$$\frac{d\boldsymbol{V}}{dt} = \boldsymbol{J}\frac{d\boldsymbol{\theta}_v}{dt} + \frac{d\boldsymbol{J}}{dt}\boldsymbol{\theta}_v \qquad \text{(Equation 40)}$$

During self-motion, if the norm $\|(dJ/dt)\theta_v\|$ of the above element $(dJ/dt)\theta_v$ has a nonzero value, the robotic arm 11 cannot remain in the singular state due to the self-motion and, as in the case of an elbow singularity, moves out of the singular state.

In the Jacobian matrix J, when the smallest singular value $\sigma_n$ shown in Equation 5 approaches the threshold $\varepsilon_{\sigma n}$ and the posture of the robotic arm 11 approaches a singularity, focus can be placed on the basis vector $v_{\theta n}$, which is the joint velocity vector corresponding to the smallest singular value $\sigma_n$. In a singular posture where the singular value $\sigma_n = 0$, the joint velocity vector $v_{\theta n}$ indicates a joint velocity corresponding to self-motion, as shown in Equation 39.

In the case of a singularity where self-motion can be continued, such as a wrist singular posture or a shoulder singular posture, the joint velocity vector $v_{\theta n}$ indicates a velocity close to that of the self-motion even near the singularity. Therefore, the acceleration of the end effector 12 moved by the robotic arm 11 is sufficiently small. Accordingly, near a singularity where the smallest singular value $\sigma_n$ and the threshold $\varepsilon_{\sigma n}$ satisfy $\sigma_n < \varepsilon_{\sigma n}$, if the absolute value $|(dJ/dt)v_{\theta n}|$ of the element $(dJ/dt)v_{\theta n}$, as shown in Equation 41, satisfies the condition of being less than the threshold $\varepsilon_a$, the singularity can be regarded as one where self-motion can be continued. The threshold $\varepsilon_a$ is a threshold for the magnitude of the acceleration of the end effector 12. Here, dJ/dt is one example of an eighth Jacobian matrix; $(dJ/dt)v_{\theta n}$ is one example of an acceleration vector; and the threshold $\varepsilon_a$ is one example of a fourth threshold.
[Math. 32]

$$\left|\frac{d\boldsymbol{J}}{dt}v_{\theta n}\right| < \varepsilon_a \qquad \text{(Equation 41)}$$

Accordingly, if the condition of Equation 41 is satisfied, the information processing apparatus 100 determines the singularity as one where self-motion of the robotic arm 11 can be continued. If the condition of Equation 41 is not satisfied, the information processing apparatus 100 determines the singularity as one where self-motion of the robotic arm 11 cannot be continued. The information processing apparatus 100 may determine the singularity as one where self-motion can be continued if the condition of Equation 41 is satisfied, and, in addition thereto or instead thereof, if the condition that the norm $\|(dJ/dt)\theta_v\|$ is a nonzero value is satisfied. By using the joint velocity vector $v_{\theta n}$, the information processing apparatus 100 can identify the type of the singularity regardless of the current velocity command value for the end effector 12.

In a case where the information processing apparatus 100 has determined the singularity as one where self-motion cannot be continued, the information processing apparatus 100 stops the robotic arm 11 as described below. The information processing apparatus 100 calculates the absolute value $|(dJ/dt)v_{\theta n}|$ by using information that is obtained every sampling period. While the robotic arm 11 is operating, at a time when the absolute value $|(dJ/dt)v_{\theta n}|$ has become maximum, the information processing apparatus 100 may stop the robotic arm 11. For example, the information processing apparatus 100 may use, as the timing to stop the robotic arm 11, the timing at which the absolute value $|(dJ/dt)v_{\theta n}|$ changes from increasing to decreasing. As a non-limiting example, in the case of an elbow singular posture, the above timing is particularly suitable as the timing to stop the robotic arm 11.

Further, at the above timing, the information processing apparatus 100 may also determine whether the direction of the commanded velocity of the end effector 12 has changed due to reversal or the like. This makes it possible to determine whether or not the change in the absolute value $|(dJ/dt)v_{\theta n}|$ from increasing to decreasing is caused by a change in the direction of the commanded velocity of the end effector 12. The information processing apparatus 100 calculates, using information obtained every sampling period, an inner product $u_{vn}^{T}u$ of the unit vector u of the commanded velocity of the end effector 12, the unit vector u being used to calculate the contribution degree $w_n$ in Equation 10, and the velocity vector $u_{vn}$ of the end effector 12 corresponding to the joint velocity vector $v_{\theta n}$ indicating self-motion, and stores the calculated inner product $u_{vn}^{T}u$ in the memory M. At or around the timing at which the absolute value $|(dJ/dt)v_{\theta n}|$ changes from increasing to decreasing, if the sign of the inner product $u_{vn}^{T}u$ has not reversed, the information processing apparatus 100 stops the robotic arm 11.

The information processing apparatus 100 may determine the timing to start moving the stopped robotic arm 11 again based on the sign of the inner product $u_{vn}^{T}u$. For example, the information processing apparatus 100 may determine, as the timing to start moving the robotic arm 11 again, the timing of reversal of the sign of the inner product $u_{vn}^{T}u$ from its sign at the time of determination to stop the robotic arm 11. In the case of the inner product $u_{vn}^{T}u$ being approximately 0, the contribution degree of the commanded velocity of the end effector 12 in the direction of the velocity vector $u_{vn}$ can be ignored. In this case, when the information processing apparatus 100 moves the robotic arm 11, the end effector 12 moves along the boundary of the operating region of the robotic arm 11.

[Case Where Robotic Arm Falls into Multiple Singular States]

There is a case where the robotic arm 11 falls into multiple singular states. In this case, two or more singular values $\sigma i$ become less than the threshold $\varepsilon_{\sigma n}$. Hereinafter, processing performed by the information processing apparatus 100 is described by taking, as an example, a case where the singular values $\sigma_n$ and $\sigma_{n-1}$ in the normalized Jacobian matrix $J_N$ of Equation 5 become less than the threshold $\varepsilon_{\sigma n}$. In this example, the singular values $\sigma_n$ and $\sigma_{n-1}$ satisfy the relationship $\sigma_n < \sigma_{n-1} < \varepsilon_{\sigma n}$. The singular value $\sigma_n$ is one example of a first singular value, and the singular value $\sigma_{n-1}$ is one example of a second singular value.

For the state SC where the contribution degree $w_n$ is greater than or equal to the threshold $\varepsilon_{wn}$, similar to step S1401 described above, the information processing apparatus 100 calculates a new matrix $J_{\varepsilon N}$ as shown in Equation 42 below, by multiplying all the elements of the matrix $\Sigma^{-1}$ in the inverse matrix $J_N^{-1}$ of the normalized Jacobian matrix $J_N$ shown in Equation 6 by $\sigma_n/\varepsilon_{\sigma n}$. However, since the singular value $\sigma_{n-1}$ falls below the threshold $\varepsilon_{\sigma n}$, for the element $1/\sigma_{n-1}$ including the singular value $\sigma_{n-1}$, the information processing apparatus 100 performs processing to prevent loss of significance in numerical calculation as shown in Equation 43 below. Since $\sigma_n < \sigma_{n-1}$, the element $1/\sigma_{n-1}'$ does not diverge. The information processing apparatus 100 performs resolved motion rate control based on the matrix $J_{\varepsilon N}$. The contribution degree $w_n$ is one example of a first contribution degree.

[Math. 33]

$$J_{\varepsilon N} = V_\theta \begin{bmatrix} 1/\sigma'_1 & \cdots & & 0 \\ \vdots & \ddots & & \vdots \\ & & 1/\sigma'_{n-1} & \\ 0 & \cdots & & 1/\varepsilon_{\sigma n} \end{bmatrix} U_V^T \qquad \text{(Equation 42)}$$

$$\frac{1}{\sigma'_{n-1}} = \frac{\sigma_n}{\sigma_{n-1}} \frac{1}{\varepsilon_{\sigma n}} \qquad \text{(Equation 43)}$$

In the state P where the contribution degree $w_n$ is less than the threshold $\varepsilon_{wn}$, the information processing apparatus 100 treats the singular value $\sigma_{n-1}$ as the smallest singular value. The information processing apparatus 100 multiplies all the elements of the matrix $\Sigma^{-1}$ in the inverse matrix $J_N^{-1}$ of the normalized Jacobian matrix $J_N$ shown in Equation 6 by $\sigma_{n-1}/\varepsilon_{\sigma n}$. The elements $1/\sigma_i$ (i = 1, ..., n-2) are modified to $\sigma_{n-1}/\sigma_i\varepsilon_{\sigma n}$. Further, $\sigma_{n-1}/\sigma_i\varepsilon_{\sigma n}$ is expressed as $1/\sigma_i''$.

Still further, similar to step S1501 described above, the information processing apparatus 100 replaces the element including the singular value $\sigma_n$ with 0. Accordingly, the information processing apparatus 100 calculates a new matrix $J_{\varepsilon NA}$ as shown in Equation 44 below. The information processing apparatus 100 performs resolved motion rate control based on the matrix $J_{\varepsilon NA}$. In this case, processing is performed for the complementary space excluding the space corresponding to the singular value $\sigma_n$. The matrix $J_{\varepsilon NA}$ is one example of a fifth inverse Jacobian matrix, and $\sigma_{n-1}/\varepsilon_{\sigma n}$ is one example of a second ratio.

[Math. 34]

$$J_{\varepsilon NA} = V_\theta \begin{bmatrix} 1/\sigma''_1 & \cdots & & \cdots & & 0 \\ \vdots & & 1/\sigma''_{n-2} & & & \vdots \\ & & & 1/\varepsilon_{\sigma n} & & \\ 0 & & \cdots & & & 0 \end{bmatrix} U_V^T \qquad \text{(Equation 44)}$$

In a singular state where each of the two singular values $\sigma_n$ and $\sigma_{n-1}$ falls below the threshold $\varepsilon_{\sigma n}$, the information processing apparatus 100 performs resolved motion rate control of the robotic arm 11 in response to four cases regarding the states of the contribution degrees $w_n$ and $w_{n-1}$ corresponding to the singular values $\sigma_n$ and $\sigma_{n-1}$, respectively. The contribution degree $w_n$ is as shown in Equation 10. The contribution degree $w_{n-1}$ is as shown in Equation 45 below, and is the contribution degree of the normalized commanded velocity vector $V_N$ of the end effector 12 in the direction of the basis vector $u_{vn-1}$ of the velocity space corresponding to the singular value $\sigma_{n-1}$. Further, the threshold $\varepsilon_{wn}$ is set for each of the contribution degree $w_n$ and the contribution degree $w_{n-1}$. The threshold $\varepsilon_{wn}$ is set within the range of $0 < \varepsilon_{wn} < 1$. The contribution degree $w_{n-1}$ is one example of a second contribution degree.

[Math. 35]

$$w_{n-1} = \frac{|u_{Vn-1}^T V_N|}{\|V_N\|} = |u_{Vn-1}^T u_N| \qquad \text{(Equation 45)}$$

(1) First case where $w_n \geq \varepsilon_{wn}$ and $w_{n-1} \geq \varepsilon_{wn}$

Since the contribution degree $w_n$ is greater than or equal to the threshold $\varepsilon_{wn}$, the information processing apparatus 100 performs resolved motion rate control for the state SC by using the normalized matrix $J_{\varepsilon N}$ shown in Equation 42 and Equation 11. For example, in a case where the difference between the singular value $\sigma_n$ and the singular value $\sigma_{n-1}$ is great, such as a case where singular value $\sigma_n$ << singular value $\sigma_{n-1}$, self-motion corresponding to the singular value $\sigma_n$ becomes dominant when the robotic arm 11 performs self-motion. As the difference between the singular value $\sigma_n$ and the singular value $\sigma_{n-1}$ decreases, the robotic arm 11 may perform combined motion of self-motion corresponding to the singular value $\sigma_n$ and self-motion corresponding to the singular value $\sigma_{n-1}$.

(2) Second case where $w_n \geq \varepsilon_{wn}$ and $w_{n-1} < \varepsilon_{wn}$

Since the contribution degree $w_n$ is greater than or equal to the threshold $\varepsilon_{wn}$, the information processing apparatus 100 performs resolved motion rate control for the state SC by using the normalized matrix $J_{\varepsilon N}$ shown in Equation 42 and Equation 11. For example, in a case where the difference between the singular value $\sigma_n$ and the singular value $\sigma_{n-1}$ is great, such as a case where singular value $\sigma_n$ << singular value $\sigma_{n-1}$, self-motion corresponding to the singular value $\sigma_n$ becomes dominant when the robotic arm 11 performs self-motion. Accordingly, the influence of the contribution degree $w_{n-1}$ falling below the threshold $\varepsilon_{wn}$ on the self-motion of the robotic arm 11 is small.

(3) Third case where $w_n < \varepsilon_{wn}$ and $w_{n-1} \geq \varepsilon_{wn}$

Since the contribution degree $w_n$ falls below the threshold $\varepsilon_{wn}$, the information processing apparatus 100 performs resolved motion rate control for the state P by using the normalized matrix $J_{\varepsilon NA}$ of Equation 44. Since the contribution degree $w_{n-1}$ is greater than or equal to the threshold $\varepsilon_{wn}$, self-motion corresponding to the singular value $\sigma_{n-1}$ becomes dominant when the robotic arm 11 performs self-motion.

(4) Fourth case where $w_n < \varepsilon_{wn}$ and $w_{n-1} < \varepsilon_{wn}$

Since the contribution degree $w_n$ falls below the threshold $\varepsilon_{wn}$, the information processing apparatus 100 performs resolved motion rate control for the state P based on the normalized matrix $J_{\varepsilon NA}$ of Equation 44. Further, since the contribution degree $w_{n-1}$ falls below the threshold $\varepsilon_{wn}$, the information processing apparatus 100 performs processing to recursively generate the normalized matrix $J_{\varepsilon NA}$ of Equation 15 for the complementary space excluding the space corresponding to the smallest singular value $\sigma_n$. That is, the information processing apparatus 100 performs transformation on the normalized matrix $J_{\varepsilon NA}$ of Equation 44 to replace the element $1/\varepsilon_{\sigma n}$ with 0, thereby generating a new normalized matrix $J_{\varepsilon NA1}$ as shown in Equation 46 below. The information processing apparatus 100 performs resolved motion rate control for the state P by using the normalized matrix $J_{\varepsilon NA1}$ of Equation 46. That is, the resolved motion rate control is performed in a four-dimensional space that results from contracting a two-dimensional space corresponding to two singular values. The matrix $J_{\varepsilon NA1}$ is one example of both a sixth inverse Jacobian matrix and a seventh inverse Jacobian matrix.

[Math. 36]

$$J_{\varepsilon NA1} = V_\theta \begin{bmatrix} 1/\sigma''_1 & \ddots & & \cdots & & 0 \\ \vdots & & 1/\sigma''_{n-2} & & & \vdots \\ & & & 0 & & \\ 0 & & \cdots & & & 0 \end{bmatrix} U_V^T \qquad \text{(Equation 46)}$$

In a singular state where each of the two singular values $\sigma_n$ and $\sigma_{n-1}$ falls below the threshold $\varepsilon_{\sigma n}$, when the robotic arm 11 operates, there is a case where the magnitude relationship between the two singular values $\sigma_n$ and $\sigma_{n-1}$ is reversed while the two singular values $\sigma_n$ and $\sigma_{n-1}$ remain below the threshold $\varepsilon_{\sigma n}$. Also in this case, the information processing apparatus 100 performs resolved motion rate control of the robotic arm 11 in response to four cases regarding the states of the contribution degrees $w_n$ and $w_{n-1}$ corresponding to the singular values $\sigma_n$ and $\sigma_{n-1}$, respectively.

(1) First case where $w_n \geq \varepsilon_{wn}$ and $w_{n-1} \geq \varepsilon_{wn}$

The information processing apparatus 100 performs resolved motion rate control for the state SC. For example, the information processing apparatus 100 may perform resolved motion rate control in accordance with Equation 12 by using the normalized matrix $J_{\varepsilon N}$ shown in Equation 42 and Equation 11, or perform resolved motion rate control in accordance with Equation 14 by using the normalized matrix $J_{\varepsilon N}$ shown in Equation 42 and Equation 11. However, since the difference between the two singular values $\sigma_n$ and $\sigma_{n-1}$ is small immediately before the reversal of the magnitude relationship between the two singular values $\sigma_n$ and $\sigma_{n-1}$, even if the contribution degree $w_n$ decreases due to the reversal, the norm $\|J_{\varepsilon N}u_N\|$ will not become less than the threshold $\kappa_\theta$. Accordingly, the information processing apparatus 100 does not perform resolved motion rate control in accordance with Equation 14. Therefore, the robotic arm 11 may perform combined motion of self-motion corresponding to the singular value $\sigma_n$ and self-motion corresponding to the singular value $\sigma_{n-1}$. Further, even if the magnitude relationship between the singular values $\sigma_n$ and $\sigma_{n-1}$ is reversed, there is no change in the velocity command values for the respective joints JT, and the operation of the robotic arm 11 can transition smoothly.

(2) Second case where $w_n \geq \varepsilon_{wn}$ and $w_{n-1} < \varepsilon_{wn}$

Since the contribution degree $w_n$ is greater than or equal to the threshold $\varepsilon_{wn}$, the information processing apparatus 100 performs resolved motion rate control for the state SC. For example, the information processing apparatus 100 may perform resolved motion rate control in accordance with Equation 12 by using the normalized matrix $J_{\varepsilon N}$ shown in Equation 42 and Equation 11, or perform resolved motion rate control in accordance with Equation 14 by using the normalized matrix $J_{\varepsilon N}$ shown in Equation 42 and Equation 11. When the robotic arm 11 performs self-motion, the self-motion corresponding to the singular value $\sigma_n$ becomes dominant. In this state, if the magnitude relationship between the singular values $\sigma_n$ and $\sigma_{n-1}$ is reversed, the contribution degree of the singular value $\sigma_n$ after the reversal falls below the threshold. Therefore, the information processing apparatus 100 performs resolved motion rate control for the state P. However, the state where the self-motion corresponding to the singular value $\sigma_n$ is dominant is maintained.

(3) Third case where $w_n < \varepsilon_{wn}$ and $w_{n-1} \geq \varepsilon_{wn}$

Since the contribution degree $w_n$ falls below the threshold $\varepsilon_{wn}$, the information processing apparatus 100 performs resolved motion rate control for the state P by using the normalized matrix $J_{\varepsilon NA}$ of Equation 44. When the robotic arm 11 performs self-motion, the self-motion corresponding to the singular value $\sigma_{n-1}$ becomes dominant. In this state, if the magnitude relationship between the singular values $\sigma_n$ and $\sigma_{n-1}$ is reversed, the state where, in the commanded velocity of the end effector 12, the commanded velocity in the direction corresponding to the singular value $\sigma_{n-1}$ after the reversal is treated as nonexistent, is maintained. The information processing apparatus 100 may exit the state P, either in accordance with a command from the user interface 30 or autonomously, by setting the commanded velocity of the end effector 12 to zero.

(4) Fourth case where $w_n < \varepsilon_{wn}$ and $w_{n-1} < \varepsilon_{wn}$

The information processing apparatus 100 performs resolved motion rate control for the state P by using the normalized matrix $J_{\varepsilon NA1}$ of Equation 46. In the normalized matrix $J_{\varepsilon NA1}$, the directional components corresponding to the singular values $\sigma_n$ and $\sigma_{n-1}$ are removed. Accordingly, even if the magnitude relationship between the singular values $\sigma_n$ and $\sigma_{n-1}$ is reversed, the resolved motion rate control by the information processing apparatus 100 is not affected thereby. The information processing apparatus 100 may exit the state P, either in accordance with a command from the user interface 30 or autonomously, by setting the commanded velocity of the end effector 12 to zero.

Accordingly, even if the magnitude relationship between two singular values in a singular state where the two singular values fall below the threshold $\varepsilon_{\sigma n}$ is reversed, it is not necessary for the information processing apparatus 100 to perform any special processing corresponding to the reversal. The information processing apparatus 100, each time the feedback information from the robot 10 is updated, can perform resolved motion rate control for each state by determining a Jacobian matrix, performing singular value decomposition, and performing the above-described processing based on the magnitude relationship between singular values.

Further, even in a case where three or more singular values fall below a threshold, or a case where, among contribution degrees corresponding to the respective singular values, a plurality of contribution degrees fall below a threshold, these cases can be handled by suitably modifying the elements in the matrix $\Sigma^{-1}$ in the same manner as described above. Thus, the present method has generality to be able to cope with cases where multiple singular states occur concurrently. For example, in a singular state where three or more singular values each fall below the threshold $\varepsilon_{\sigma n}$, the information processing apparatus 100 may perform resolved motion rate control for each state by performing processing similar to the processing described above for each of the first to fourth cases. Even if reversal of the magnitude relationship among three or more singular values occurs, the information processing apparatus 100 may perform resolved motion rate control for each state by performing processing similar to the processing described above for each of the first to fourth cases.

For example, in a singular state where each of the first singular value $\sigma_n$ to the k-th singular value $\sigma_{n-k+1}$, including the first singular value $\sigma_n$, the second singular value $\sigma_{n-1}$, and one or more next smallest singular values following the second singular value $\sigma_{n-1}$, falls below the threshold $\varepsilon_{\sigma n}$, the information processing apparatus 100 determines the first contribution degree $w_n$ to the k-th contribution degree $w_{n-k+1}$ corresponding to the first singular value $\sigma_n$ to the k-th singular value $\sigma_{n-k+1}$, respectively. It should be noted that k is a natural number greater than or equal to 3 and less than or equal to n.

The information processing apparatus 100 sequentially determines, from the first contribution degree $w_n$ to the k-th contribution degree $w_{n-k+1}$, whether or not each contribution degree is greater than or equal to the threshold $\varepsilon_{wn}$. If the contribution degree greater than or equal to the threshold $\varepsilon_{wn}$ is found, the information processing apparatus 100 transforms the inverse matrix $J_N^{-1}$ of the normalized Jacobian matrix $J_N$ shown in Equation 6 with reference to the i-th singular value $\sigma_{n-i+1}$ corresponding to the i-th contribution degree $w_{n-i+1}$ first determined to be greater than or equal to the threshold $\varepsilon_{wn}$. Here, i is a natural number greater than or equal to 1 and less than or equal to k. The ordinal number i of the i-th contribution degree $w_{n-i+1}$ is the smallest among the ordinal numbers of the contribution degrees that are greater than or equal to the threshold $\varepsilon_{wn}$.

In the above transformation, the information processing apparatus 100 performs a zero transformation to replace the first singular value $\sigma_n$ to the (i-1)-th singular value $\sigma_{n-i}$ among the singular values included in the matrix $\Sigma^{-1}$ in the inverse matrix $J_N^{-1}$ with 0. Further, the information processing apparatus 100 determines, for each of the (i+1)-th contribution degree $w_{n-i}$ to the k-th contribution degree $w_{n-k+1}$ corresponding to the (i+1)-th singular value $\sigma_{n-i}$ to the k-th singular value $\sigma_{n-k+1}$, whether or not the contribution degree is greater than or equal to the threshold $\varepsilon_{wn}$. The information processing apparatus 100 performs a zero transformation to replace singular values whose contribution degrees are less than the threshold $\varepsilon_{wn}$ with 0.

Further, the information processing apparatus 100 calculates a new normalized matrix transformed from the inverse matrix $J_N^{-1}$ by multiplying all the elements of the matrix $\Sigma^{-1}$, after the two zero transformations, by a third ratio $\sigma_{n-i+1}/\varepsilon_{\sigma n}$. Among the i-th singular value $\sigma_{n-i+1}$ to the k-th singular value $\sigma_{n-k+1}$, the i-th singular value $\sigma_{n-i+1}$ is the smallest singular value. Similar to the above-described third case, the information processing apparatus 100 performs resolved motion rate control for the state P by using the normalized matrix. The normalized matrix is one example of the seventh inverse Jacobian matrix.

For example, in a case where each of the first contribution degree $w_n$ to the k-th contribution degree $w_{n-k+1}$ is

greater than or equal to the threshold $\varepsilon_{wn}$, the information processing apparatus 100 uses the first ratio $\sigma_n/\varepsilon_{\sigma n}$ as the third ratio. The information processing apparatus 100 multiples all the elements of the matrix $\Sigma^{-1}$ in the inverse matrix $J_N^{-1}$ of the normalized Jacobian matrix $J_N$ shown in Equation 6 by the first ratio $\sigma_n/\varepsilon_{\sigma n}$ to calculate the normalized matrix $J_{\varepsilon N}$ shown in Equation 42. Similar to the above-described first case or second case, the information processing apparatus 100 performs resolved motion rate control for the state SC by using the normalized matrix $J_{\varepsilon N}$.

For example, in a case where each of the first contribution degree $w_n$ to the k-th contribution degree $w_{n-k+1}$ is less than the threshold $\varepsilon_{wn}$, the information processing apparatus 100 performs a zero transformation to replace all of the first singular value $\sigma_n$ to the k-th singular value $\sigma_{n-k+1}$ in the inverse matrix $J_N^{-1}$ of the normalized Jacobian matrix $J_N$ shown in Equation 6 with 0 to calculate a new normalized matrix. Further, in the new normalized matrix, the information processing apparatus 100 may multiply all the elements of the matrix $\Sigma^{-1}$, after the zero transformation, by the third ratio $\sigma_{n-k+1}/\varepsilon_{\sigma n}$. Similar to the above-described fourth case, the information processing apparatus 100 performs resolved motion rate control for the state P by using the normalized matrix. The normalized matrix is one example of the seventh inverse Jacobian matrix.

For example, in a singular state where each of the three singular values $\sigma_n$, $\sigma_{n-1}$, and $\sigma_{n-2}$ falls below the threshold $\varepsilon_{\sigma n}$, the information processing apparatus 100 may perform resolved motion rate control of the robotic arm 11 in response to eight cases regarding the states of the respective contribution degrees $w_n$, $w_{n-1}$, and $w_{n-2}$ relative to the threshold $\varepsilon_{wn}$. In these cases, processing can be performed in the same manner as the processing in the first to fourth cases.

When the robotic arm 11 operates, it is often the case that a singular state where the three singular values $\sigma_n$, $\sigma_{n-1}$, and $\sigma_{n-2}$ fall below the threshold $\varepsilon_{\sigma n}$ at the same time does not occur, but a singular state where two singular values fall below the threshold $\varepsilon_{\sigma n}$ occurs first and thereafter a state where one more singular value falls below the threshold $\varepsilon_{\sigma n}$ occurs.

For example, the robotic arm 11 shown in FIG. 4 is in a singular state where three singular values fall below the threshold $\varepsilon_{\sigma n}$. The robotic arm 11 shown in each of FIG. 5 to FIG. 7 is in a singular state where one singular value falls below the threshold $\varepsilon_{\sigma n}$. The robotic arm 11 may first reach the shoulder singular posture shown in FIG. 7, then reach the elbow singular posture shown in FIG. 5 by extending the elbow, and thereafter, or concurrently, reach the wrist singular posture shown in FIG. 6, which makes it possible to reach the singular posture as shown in FIG. 4 where three singular values fall below the threshold $\varepsilon_{\sigma n}$.

In a singular state where each of the two singular values $\sigma_n$ and $\sigma_{n-1}$ falls below the threshold $\varepsilon_{\sigma n}$, the information processing apparatus 100 may perform processing that does not depend on the magnitude relationship between the singular values $\sigma_n$ and $\sigma_{n-1}$. The information processing apparatus 100 multiplies all the elements of the matrix $\Sigma^{-1}$ in the inverse matrix $J_N^{-1}$ of the normalized Jacobian matrix $J_N$ shown in Equation 6 by $\sigma_n/\varepsilon_{\sigma n}$ to calculate a new matrix $J_{\varepsilon N}$ shown in Equation 42. Further, the information processing apparatus 100 calculates a new matrix $J_{\varepsilon ND}$ shown in Equation 47 below by replacing the element including the singular value $\sigma_{n-1}$ with the same value $1/\varepsilon_{\sigma n}$ as the element including the singular value $\sigma_n$. This makes it possible to prevent divergence of each of the elements including the singular values $\sigma_n$ and $\sigma_{n-1}$. The information processing apparatus 100 can perform resolved motion rate control using the normalized matrix $J_{\varepsilon ND}$ of Equation 47.

[Math. 37]

$$J_{\varepsilon ND} = V_\theta \begin{bmatrix} 1/\sigma'_1 & \cdots & & \cdots & & 0 \\ \vdots & \ddots & & & & \vdots \\ & & 1/\sigma'_{n-2} & & & \\ & & & 1/\varepsilon_{\sigma n} & & \\ 0 & & \cdots & & 1/\varepsilon_{\sigma n} \end{bmatrix} U_V^T \qquad \text{(Equation 47)}$$

[Variation of Robot System]

Hereinafer, a variation of the robot system 1 according to the embodiment is described. A robot system 1A according to the variation is different from the above-described embodiment in the following point: the robot system 1A is a remotely operated robot system in which the user interface 30 and the robot 10 are connected via a communication network N. Hereinafter, the present variation is described focusing on differences from the above-described embodiment, and the description of the same features as those of the above-described embodiment is omitted as necessary.

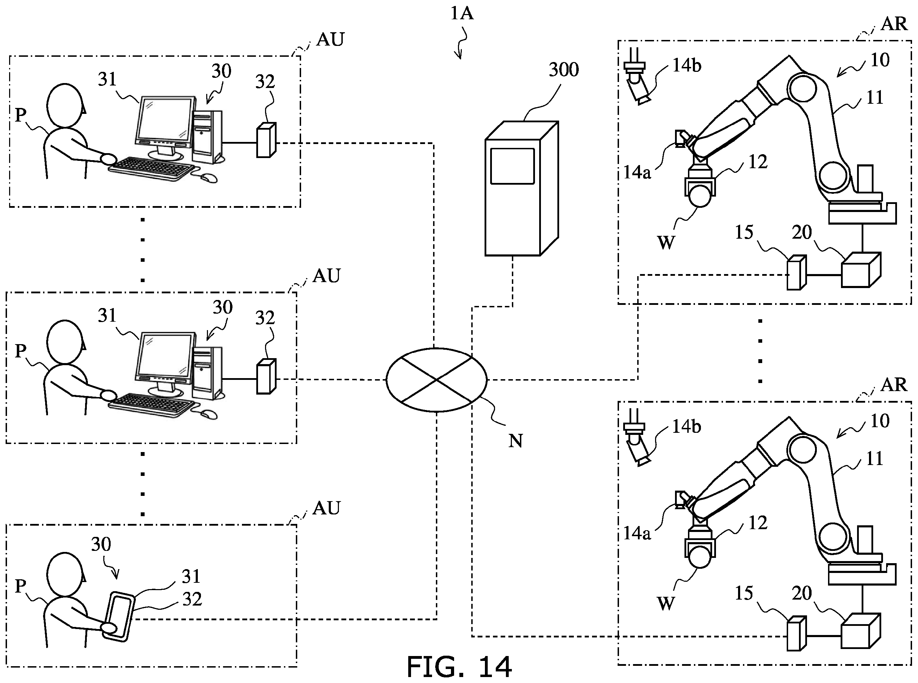

FIG. 14 shows one example of the configuration of the robot system 1A according to the variation. As shown in FIG. 14, the robot system 1A includes: the robot 10 and the controller 20, which are located in each of one or more robot areas AR; the user interface 30 located in each of one or more user areas AU; and an intermediary device 300, which matches a robot area AR and a user area AU and connects the controller 20 included in the robot area AR and the user interface 30 included in the user area AU, such that the controller 20 and the user interface 30 can perform data communication with each other via the communication network N. Functions of the information processing apparatus 100 are realized, at least partially, by one of or both the user interface 30 and the intermediary device 300. The controller 20 includes, at least, the power control circuit 200. As a non-limiting example, in the present variation, a plurality of robot areas AR and a plurality of user areas AU exist as targets for the robot system 1A.

The robot system 1A further includes, in each robot area AR, image capturing devices 14a and 14b and a robot communication device 15. Each of the image capturing devices 14a and 14b includes a camera, and is connected to the controller 20. The image capturing device 14a is located on the robot 10, for example, on the robotic arm 11, and captures images of the end effector 12 and a workpiece W to be worked on by the end effector 12. The image capturing device 14b is located not on the robot 10, but at a different position, so as to capture an image of the entire robot 10. The robot communication device 15 includes a modem, an ONU (Optical Network Unit), a router, or a mobile data communication device. The robot communication device 15 connects the controller 20 to the communication network N. The controller 20 can transmit and receive information, commands, and data to and from the user interface 30 and the intermediary device 300 via the communication network N. The controller 20 can transmit image data obtained by the image capturing devices 14a and 14b.

The robot system 1A further includes, in each user area AU, a presentation device 31 and a user communication device 32. The presentation device 31 is connected to the user interface 30, and presents information to an operator P in a perceptible manner. The presentation device 31 includes, at least, a display, and may further include a speaker or the like. The user communication device 32 includes a modem, ONU, router, or a mobile data communication device. The user communication device 32 connects the user interface 30 to the communication network N. The user interface 30 can transmit and receive information, commands, and data to and from the controller 20 and the intermediary device 300 via the communication network N. The presentation device 31 presents, as images, the image data obtained by the image capturing devices 14a and 14b and received by the user interface 30. The user interface 30 may include the presentation device 31 and/or the user communication device 32.

The intermediary device 300 manages communication performed via the communication network N. The intermediary device 300 may be configured to include a server that includes a computer device. The intermediary device 300 manages, for example, authentication of the user communication device 32 and connection and disconnection between the user communication device 32 and the robot communication device 15. For example, the intermediary device 300 connects the robot communication device 15 of the robot 10, specified by the user interface 30 connected to the authenticated user communication device 32, with the user communication device 32. That is, the intermediary device 300 matches and connects the user communication device 32 and the robot communication device 15. The intermediary device 300 manages transmission and reception of data between the robot communication device 15 and the user communication device 32, and the data may pass through the intermediary device 300.

The communication network N is not particularly limited, and may include, for example, a local area network (LAN), a wide area network (WAN), the Internet, or a combination of two or more of these. The communication network N may be configured to use short-distance wireless communication such as Bluetooth (registered trademark) and ZigBee (registered trademark), a dedicated network line, a dedicated line of a communication service provider, a public switched telephone network (PSTN), a mobile communication network, the Internet, satellite communication, or a combination of two or more of these. The mobile communication network may be one that uses, for example, a fourth-generation mobile communication system or a fifth-generation mobile communication system. The communication network N may include one or a plurality of networks. In the present variation, the communication network N is the Internet.

In the present variation, the intermediary device 300 is equipped with the functions of the information processing apparatus 100 according to the embodiment. The intermediary device 300 receives, from the controller 20 or the user interface 30 connected to the controller 20, information about the specifications of the robot 10 connected to the controller 20. The intermediary device 300 receives feedback information about the robot 10 from the controller 20, and generates a Jacobian matrix by using the feedback information and the information about the specifications of the robot 10. Based on the Jacobian matrix, the intermediary device 300 performs singularity-related processing, which is performed by the information processing apparatus 100 according to the embodiment.

Even if the controller 20 of the robot area AR is not equipped with the functions of the information processing apparatus 100, the intermediary device 300 can function as the information processing apparatus 100 and can cause the robot 10 to perform operations corresponding to singularities. The intermediary device 300 can function as the information processing apparatus 100 by obtaining the information about the specifications of the robot 10. The intermediary device 300 makes it unnecessary for the operator P in the user area AU to operate the robot 10 to avoid singularities based on a limited region image presented by the presentation device 31. The operator P can operate the robot 10 without taking singularities into consideration. The intermediary device 300 makes it possible for various operators P to easily operate various robots 10.

It should be noted that the user interface 30 may be equipped with some of or all of the functions of the information processing apparatus 100 according to the embodiment. The user interface 30 may incorporate therein the functions of the information processing apparatus 100 as application software. For example, in a case where the user interface 30 is equipped with all of the functions of the information processing apparatus 100 according to the embodiment, the intermediary device 300 may: perform matching between the user interface 30 and the controller 20; and mediate the transmission and reception of information, commands, and data between the user interface 30 and the controller 20. For example, the user interface 30 may be equipped with some of the functions of the information processing apparatus 100 according to the embodiment, and the intermediary device 300 may be equipped with the remaining functions, or all of the functions, of the information processing apparatus 100. The functions of the information processing apparatus 100 that the user interface 30 is equipped with, and the functions of the information processing apparatus 100 that the intermediary device 300 is equipped with, may or may not overlap. For example, the intermediary device 300 may perform processing that the user interface 30 cannot perform as the information processing apparatus 100, and may provide the user interface 30 with results of the processing.

The controller 20 may be equipped with some of the functions of the information processing apparatus 100. In this case, the intermediary device 300 may be equipped with the remaining functions, or all of the functions, of the information processing apparatus 100, or the user interface 30 may be equipped with the remaining functions, or all of the functions, of the information processing apparatus 100. Each of the controller 20, the user interface 30, and the intermediary device 300 may be equipped with some of the functions of the information processing apparatus 100. In this case, the intermediary device 300 may be equipped with all of the functions of the information processing apparatus 100. The functions of the information processing apparatus 100 that the controller 20 is equipped with, the functions of the information processing apparatus 100 that the user interface 30 is equipped with, and the functions of the information processing apparatus 100 that the intermediary device 300 is equipped with, may or may not overlap.

[Others]

Although the illustrative embodiment and variation of the present disclosure have been described as above, the present disclosure is not limited to the above-described embodiment and variation. That is, various modifications and improvements can be made within the scope of the present disclosure. For example, embodiments obtained by implementing various modifications on the above embodiment or variation, and embodiments obtained by combining components of different embodiments and variations, also fall within the scope of the present disclosure.

For example, in the above embodiment and variation, the information processing apparatus 100 performs singularity-related processing in the case of manipulation control of the robot 10. However, this is a non-limiting example. In the case of autonomous control of the robot 10, i.e., in a case where the robot 10 autonomously operates in accordance with preset data such as teaching data, the information processing apparatus 100 may perform singularity-related processing. Accordingly, even if the teaching data does not include data for causing the robot 10 to operate in a manner to avoid singularities, when causing the robot 10 to operate in accordance with the teaching data, the information processing apparatus 100 can perform singularity-related processing and cause the robot 10 to perform operations corresponding to singularities.

Examples of aspects of the technology of the present disclosure are as follows. A program according to a first aspect of the present disclosure is a program for controlling operation of a robot, the robot including a plurality of joints and a movable part that is moved as a result of the plurality of joints operating, the program causing a computer to carry out: performing singular value decomposition on a first Jacobian matrix that associates operating velocities of the plurality of respective joints with a moving velocity of the movable part to generate a second Jacobian matrix including a first matrix, a second matrix, and a first singular matrix, the first matrix including, in its elements, first basis vectors that span an operating velocity space of the joints, the second matrix including, in its elements, second basis vectors that span a moving velocity space of the movable part, the first singular matrix including singular values in its diagonal elements; determining, as processing to be performed, either first processing or second processing based on a result of comparison between the singular values and a first threshold, and performing the determined processing, the first processing being performed in a case where the robot is at a singularity and in a case where the robot is near the singularity, the second processing being performed in a case where the robot is away from the singularity; in the first processing, generating a third Jacobian matrix by transforming the diagonal elements in the first singular matrix; in the first processing, determining an operation command value to command operation of the plurality of joints by using the third Jacobian matrix and a movement command value to command movement of the movable part, and outputting the determined operation command value; and in the second processing, determining the operation command value by using the first or second Jacobian matrix and the movement command value, and outputting the determined operation command value.

According to the above aspect, in the first processing, the diagonal elements in the first singular matrix are transformed, and thereby the third Jacobian matrix is generated from the second Jacobian matrix. In this case, the transformation of the diagonal elements may be performed so as to correspond to a state where the robot is at a singularity and to a state where the robot is near a singularity. For example, in a state where the robot is at a singularity and a state where the robot is near a singularity, the diagonal elements may be transformed so that the elements of the inverse matrix of the second Jacobian matrix do not diverge. With such transformation, in a state where the robot is at a singularity and a state where the robot is near a singularity, rapid changes in the joint velocities can be prevented. Thus, with this novel method of transforming the diagonal elements in the first singular matrix, the robot's operation can be controlled in a manner corresponding to singularities.

Near a singularity, conventional resolved motion rate control may result in excessively high joint velocities. Singularity low-sensitivity decomposition and singularity-consistent approach are existing methods to solve such a problem. With the singularity low-sensitivity decomposition, the joint velocities can be suppressed from becoming excessively high; however, there is a problem in that the end effector deviates from an originally commanded trajectory. With the singularity-consistent approach, while suppressing the joint velocities from becoming excessively high, the deviation of the end effector from an originally commanded trajectory is also prevented. However, the singularity-consistent approach requires analytical calculation of the adjugate matrix of a Jacobian matrix, and applying it to a specific arm requires significant time and effort.

While the conventional singularity-consistent approach requires the calculation of the adjugate matrix of a Jacobian matrix, the inventors of the present application have come up with performing singular value decomposition on the Jacobian matrix and scaling the singular values such that the ratios of the reciprocals of the singular values are preserved. Consequently, the inventors of the present application have found that a matrix having an effect equivalent to that of the adjugate matrix of a Jacobian matrix in the conventional singularity-consistent approach can be obtained not by analytical calculation but by numerical calculation.

In the above first aspect, the program according to a second aspect of the present disclosure may cause the computer to carry out: calculating a first norm that is a norm of a vector obtained by applying the operation command value to the Jacobian matrix used to determine the operation command value; in a case where the first norm is greater than the movement command value, correcting the operation command value by using the first norm to determine a corrected operation command value, and outputting the corrected operation command value as the operation command value; and in a case where the first norm is less than or equal to the movement command value, outputting the operation command value.

According to the above aspect, the upper limit of the velocity at which the robot moves the movable part can be set, and the operation command value for the plurality of joints can be determined so that the movable part will move at the upper limit velocity or lower. Consequently, an excessive increase in the moving velocity of the movable part can be prevented.

In the above first aspect or second aspect, the program according to a third aspect of the present disclosure may cause the computer to carry out: receiving first information that is information about specifications of the robot; and generating the first Jacobian matrix by using the first information and information about states of the plurality of respective joints.

According to the above aspect, the first information can be obtained, and the first Jacobian matrix can be generated by using the obtained first information. Accordingly, the first Jacobian matrix can be set in accordance with the robot.

In any of the above first to third aspects, the program according to a fourth aspect of the present disclosure may cause the computer to carry out: in a case where a smallest value of the singular values is less than the first threshold, determining to perform the first processing; and in a case where the smallest value of the singular values is greater than or equal to the first threshold, determining to perform the second processing.

According to the above aspect, the smallest singular value decreases as the robot approaches a singularity. The condition as to whether or not the smallest singular value is less than the first threshold can be used as a condition for determining whether or not the robot is in a state of being near a singularity, i.e., as a condition for determining whether or not to perform the first processing. Accordingly, whether or not to perform the first processing can be determined with certainty.

In any of the above first to fourth aspects, the program according to a fifth aspect of the present disclosure may cause the computer to carry out: generating a second inverse Jacobian matrix that is an inverse matrix of the second Jacobian matrix, the second inverse Jacobian matrix including a first transformation matrix transformed from the first matrix, a second transformation matrix transformed from the second matrix, and a first transformation singular matrix transformed from the first singular matrix; in the first processing, generating a third inverse Jacobian matrix that is an inverse matrix of the third Jacobian matrix by performing a first transformation to transform diagonal elements in the first transformation singular matrix; in the first processing, determining the operation command value by applying the movement command value to the third inverse Jacobian matrix; and in the second processing, determining the operation command value by applying the movement command value to a first inverse Jacobian matrix that is an inverse matrix of the first Jacobian matrix or to the second inverse Jacobian matrix.

According to the above aspect, by applying the moving velocity of the movable part to an inverse Jacobian matrix that is an inverse matrix of a Jacobian matrix, the operating velocities of the plurality of respective joints can be obtained. The use of the inverse Jacobian matrix makes it possible to determine the operation command value corresponding to the movement command value.

In the above fifth aspect, the program according to a sixth aspect of the present disclosure may cause the computer to carry out, in the first transformation, transforming each of the diagonal elements in the first transformation singular matrix, the diagonal elements including the singular values, so as to maintain ratios among the diagonal elements.

According to the above aspect, in the first transformation, the ratios among the diagonal elements in the first transformation singular matrix, the diagonal elements including the singular values, are maintained. Accordingly, the first transformation maintains the relationship between the movement command value and the operation command value, which is originally inherent in the inverse Jacobian matrix. When the same movement command value is applied to the first inverse Jacobian matrix, the second inverse Jacobian matrix, and the third inverse Jacobian matrix, an operation command value to move the movable part in the same direction can be obtained. Regardless of whether or not the robot is near a singularity, the movement of the movable part in a commanded direction can be maintained.

In the above sixth aspect, the program according to a seventh aspect of the present disclosure may cause the computer to carry out, in the first transformation, multiplying each of the diagonal elements by a first ratio, the first ratio being a ratio of a smallest value of the singular values in the first transformation singular matrix to the first threshold.

According to the above aspect, in the first transformation singular matrix, even if the smallest singular value approaches 0, the diagonal element including the smallest singular value does not diverge. Accordingly, near a singularity, the velocity of the joint corresponding to the diagonal element is prevented from changing rapidly.

In any of the above fifth to seventh aspects, the program according to an eighth aspect of the present disclosure may cause the computer to carry out: in the first processing, calculating a second norm that is a norm of a vector obtained by applying, to the third inverse Jacobian matrix, a direction vector that represents a direction of a commanded velocity of the movable part, the commanded velocity being included in the movement command value; in the first processing, in a case where the second norm is greater than or equal to a second threshold, determining the operation command value by applying the movement command value to the third inverse Jacobian matrix that has been normalized by using the second norm; and in the first processing, in a case where the second norm is less than the second threshold, determining the operation command value by applying the movement command value to an inverse Jacobian matrix that is obtained by replacing, in the third inverse Jacobian matrix that has been normalized by using the second norm, the second norm with the second threshold.

According to the above aspect, the second norm indicates the magnitude of the moving velocity of the movable part corresponding to the directional component of the commanded velocity of the movable part. When the second norm becomes small, the normalized third inverse Jacobian matrix may diverge. In a case where the second norm is less than the second threshold, in the normalized third inverse Jacobian matrix, by replacing the second norm with the second threshold, the normalized third inverse Jacobian matrix can be prevented from diverging. Accordingly, near a singularity, the velocity of the movable part is prevented from changing rapidly.

In any of the above fifth to eighth aspects, the program according to a ninth aspect of the present disclosure may cause the computer to carry out: in the first processing, determining a contribution degree that is a degree to which a commanded velocity of the movable part, the commanded velocity being included in the movement command value, contributes to a direction of one of the second basis vectors; in the first processing, in a case where the contribution degree is greater than or equal to a third threshold, determining the operation command value by using the third inverse Jacobian matrix; in the first processing, in a case where the contribution degree is less than the third threshold, transforming the third inverse Jacobian matrix into a fourth inverse Jacobian matrix, such that a value of a diagonal element corresponding to a smallest value of the singular values in the first transformation singular matrix after the first transformation is set to 0; and in the first processing, in the case where the contribution degree is less than the third threshold, determining the operation command value by applying the movement command value to the fourth inverse Jacobian matrix.

According to the above aspect, in a case where the commanded velocity of the movable part includes a component that does not contribute to any of the directions of the second basis vectors that span the moving velocity space of the movable part, the third inverse Jacobian matrix is transformed into the fourth inverse Jacobian matrix, such that the value of the diagonal element corresponding to the smallest singular value in the first transformation singular matrix after the first transformation is set to 0. By using the fourth inverse Jacobian matrix, it is possible to reduce an error between the movement command value and the velocity of the movable part which is realized by the operation command value.

In any of the above fifth to ninth aspects, the program according to a tenth aspect of the present disclosure may cause the computer to carry out: in the first processing, among contribution degrees that are degrees to which a commanded velocity of the movable part, the commanded velocity being included in the movement command value, contributes to directions of the respective second basis vectors, determining a first contribution degree corresponding to a first singular value that is a smallest value of the singular values in the first transformation singular matrix; in the first processing, in a case where each of the first singular value and a second singular value, the second singular value being a next smallest singular value following the first singular value among the singular values in the first transformation singular matrix, is less than the first threshold, and the first contribution degree is greater than or equal to a third threshold, generating the third inverse Jacobian matrix by multiplying each of the diagonal elements in the first transformation singular matrix by a first ratio of the first singular value to the first threshold, and determining the operation command value by applying the movement command value to the third inverse Jacobian matrix; and in the first processing, in a case where each of the first singular value and the second singular value is less than the first threshold, and the first contribution degree corresponding to the first singular value is less than the third threshold, setting a value of a diagonal element corresponding to the first singular value in the first transformation singular matrix to 0, generating a fifth inverse Jacobian matrix by multiplying each of the diagonal elements in the first transformation singular matrix by a second ratio of the second singular value to the first threshold, and determining the operation command value by applying the movement command value to the fifth inverse Jacobian matrix.

According to the above aspect, in a case where the first singular value and the second singular value are less than the first threshold, an inverse Jacobian matrix can be determined in accordance with the relationship between the first contribution degree corresponding to the first singular value and the third threshold, and the operation command value can be determined by using the determined inverse Jacobian matrix. This makes it possible to perform robot operation control corresponding to a state where the robot is at or near a singularity, such as a state where two singular values are less than the first threshold.

In the above tenth aspect, the program according to an eleventh aspect of the present disclosure may cause the computer to carry out, in the first processing, in a case where each of the first singular value and the second singular value is less than the first threshold, and the first contribution degree and a second contribution degree corresponding to the second singular value are less than the third threshold, setting a value of each of diagonal elements corresponding to the first and second singular values in the first transformation singular matrix to 0, generating a sixth inverse Jacobian matrix by multiplying each of the diagonal elements in the first transformation singular matrix by the second ratio, and determining the operation command value by applying the movement command value to the sixth inverse Jacobian matrix.

According to the above aspect, in a case where the commanded velocity of the movable part includes a component that does not contribute to the directions of the second basis vectors corresponding to the respective first and second singular values, the sixth inverse Jacobian matrix is generated such that the values of the diagonal elements corresponding to the first and second singular values in the first transformation singular matrix are set to 0. By using the sixth inverse Jacobian matrix, the operation command value from which the components corresponding to the first and second singular values are removed is generated. Accordingly, it is possible to reduce an error between the movement command value and the velocity of the movable part which is realized by the operation command value.

In any of fifth to eleventh aspects, the program according to a twelfth aspect of the present disclosure may cause the computer to carry out: in the first processing, in a case where each of a first singular value to a k-th singular value (where k is a natural number greater than or equal to 3), including the first singular value that is a smallest value of the singular values in the first transformation singular matrix and two or more next smallest singular values following the first singular value among the singular values in the first transformation singular matrix, is less than the first threshold, determining a first contribution degree to a k-th contribution degree that are degrees to which a commanded velocity of the movable part, the commanded velocity being included in the movement command value, contributes to directions of the second basis vectors, the directions corresponding to the first to k-th singular values, respectively; in the first processing, in a case where each of the first contribution degree to the k-th contribution degree is greater than or equal to a third threshold, in the first transformation, generating the third inverse Jacobian matrix by multiplying each of the diagonal elements in the first transformation singular matrix by a first ratio of the first singular value to the first threshold, and determining the operation command value by applying the movement command value to the third inverse Jacobian matrix; in the first processing, in a case where at least one of the first contribution degree to the k-th contribution degree is less than the third threshold, in the first transformation, performing a zero transformation to set a value of a diagonal element in the first transformation singular matrix, the diagonal element corresponding to the singular value whose contribution degree is less than the third threshold, to 0, and multiplying each of the diagonal elements in the first transformation singular matrix after the zero transformation by a third ratio to transform the first transformation singular matrix into a seventh inverse Jacobian matrix, the third ratio being a ratio of a smallest singular value, among the singular values in the first transformation singular matrix after the zero transformation excluding the singular value whose contribution degree is less than the third threshold, to the first threshold; and in the first processing, in the case where at least one of the first contribution degree to the k-th contribution degree is less than the third threshold, determining the operation command value by applying the movement command value to the seventh inverse Jacobian matrix.

According to the above aspect, also in a case where three or more singular values are less than the first threshold, similar to the case where two singular values are less than the first threshold, an inverse Jacobian matrix can be determined in accordance with the contribution degrees corresponding to the respective singular values, and the operation command value can be determined by using the determined inverse Jacobian matrix. This makes it possible to perform robot operation control corresponding to a state where the robot is at or near a singularity, such as a state where three singular values are less than the first threshold.

In any of the above first to twelfth aspects, the program according to a thirteenth aspect of the present disclosure may cause the computer to carry out: generating an eighth Jacobian matrix by differentiating the first Jacobian matrix with respect to time; generating an acceleration vector by applying, from among the operating velocities of the plurality of respective joints during the first processing, the velocity in the second basis vector corresponding to self-motion of the robot to the eighth Jacobian matrix; in the first processing, in a case where a norm of the acceleration vector is greater than or equal to a fourth threshold, determining whether or not the norm of the acceleration vector indicates a maximum value; and in a case where the norm of the acceleration vector indicates the maximum value, outputting a command to stop the plurality of joints from operating.

According to the above aspect, in a case where the norm of the acceleration vector is less than the fourth threshold, the robot generates a small acceleration that allows the self-motion to continue. In a case where the norm of the acceleration vector is greater than or equal to the fourth threshold, the robot generates an acceleration that enables the robot to move out of a near-singularity state by self-motion. In a case where the norm of the acceleration vector is greater than or equal to the fourth threshold and where the norm of the acceleration vector indicates the maximum value, the robot may reach a singularity and cause a vibration phenomenon in which deviation from and reaching the singularity are repeated by self-motion. In such a case, by temporarily stopping the plurality of joints from operating and then allowing the plurality of joints to operate again, the vibration phenomenon can be prevented.

A storage medium according to a fourteenth aspect of the present disclosure stores the program according to any one of the above first to thirteenth aspects. According to the above aspect, the same advantageous effects as those of the programs according to the respective aspects of the present disclosure can be obtained. The storage medium may be a non-transitory tangible computer-readable medium. The storage medium may be a non-transitory tangible computer-readable storage medium. Examples of the storage medium may include one or a plurality of semiconductor-based or other integrated circuits (ICs), ROM, EEPROM (Electrically Erasable and Programmable Read Only Memory), EPROM, flash memory, CD-ROM (Compact Disc Read Only Memory), CD-RW (Compact Disc Rewritable), DVD (Digital Versatile Disk), hard disk drive (HDD), hybrid hard drive (HHD), optical disc, optical disc drive (ODD), magneto-optical disk, magneto-optical drive, floppy disc, floppy disc drive (FDD), magnetic tape, solid state drive (SSD), RAM drive, secure digital card, secure digital drive, any other suitable storage medium, or a combination of two or more of these. Examples of the integrated circuits may include field-programmable gate arrays (FPGAs) and application-specific ICs (ASICs). The storage medium may be a volatile type, nonvolatile type, or a combination of volatile and nonvolatile types.

An information processing apparatus according to a fifteenth aspect of the present disclosure includes: a memory that stores the program according to any one of the above first to thirteenth aspects; and a processor that executes the program stored in the memory. According to the above aspect, the same advantageous effects as those of the programs according to the respective aspects of the present disclosure can be obtained.

A system according to a sixteenth aspect of the present disclosure includes: an information processing apparatus including a computer that executes the program according to any one of the above first to thirteenth aspects; and the robot, wherein: the information processing apparatus is connected to the robot and to a user interface that receives an input to operate the robot; the information processing apparatus receives, from the user interface, a command to move the movable part, determines the operation command value by using the movement command value that is based on the command to move the movable part, and transmits the operation command value to the robot; and the information processing apparatus receives an input of first information that is information about specifications of the robot, and generates the first Jacobian matrix by using the first information. According to the above aspect, the same advantageous effects as those of the programs according to the respective aspects of the present disclosure can be obtained.

A robot operation controlling method according to a seventeenth aspect of the present disclosure is a method of controlling operation of a robot, the robot including a plurality of joints and a movable part that is moved as a result of the plurality of joints operating, the method including: performing singular value decomposition on a first Jacobian matrix that associates operating velocities of the plurality of respective joints with a moving velocity of the movable part to generate a second Jacobian matrix including a first matrix, a second matrix, and a first singular matrix, the first matrix including, in its elements, first basis vectors that span an operating velocity space of the joints, the second matrix including, in its elements, second basis vectors that span a moving velocity space of the movable part, the first singular matrix including singular values in its diagonal elements; determining, as processing to be performed, either first processing or second processing based on a result of comparison between the singular values and a first threshold, and performing the determined processing, the first processing being performed in a case where the robot is at a singularity and in a case where the robot is near the singularity, the second processing being performed in a case where the robot is away from the singularity; in the first processing, generating a third Jacobian matrix by transforming the diagonal elements in the first singular matrix; in the first processing, determining an operation command value to command operation of the plurality of joints by using the third Jacobian matrix and a movement command value to command movement of the movable part, and outputting the determined operation command value; and in the second processing, determining the operation command value by using the first or second Jacobian matrix and the movement command value, and outputting the determined operation command value. According to the above aspect, the same advantageous effects as those of the programs according to the respective aspects of the present disclosure can be obtained.

The program of the present disclosure may be, for example, a program stored in a non-transitory tangible computer-readable storage medium, and may be configured to be read from the storage medium and installed on a computer by using a storage medium drive device. The program may be, for example, one that is distributable via transmission media such as the Internet and configured to be downloaded and installed on a computer.

The method of the present disclosure may be partially or entirely realized by, for example, a CPU, a circuit such as an LSI, an IC card, or a single module. A plurality of elements included in the method of the present disclosure may be realized by a single device, or may be realized in a shared manner by two or more devices.

The functionality of the elements disclosed herein may be implemented using circuitry or processing circuitry which includes general purpose processors, special purpose processors, integrated circuits, ASICs, conventional circuitry and/or combinations thereof which are configured or programmed to perform the disclosed functionality. Processors are considered processing circuitry or circuitry as they include transistors and other circuitry therein. In the present disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

All of the numbers used herein, such as ordinal numbers and those indicating quantities, are mere examples to specifically describe the technology of the present disclosure, and the present disclosure is not limited to those example numbers. Connection relationships between the components herein are mere examples to specifically describe the technology of the present disclosure, and connection relationships to realize the functionality of the present disclosure are not limited to these examples.

As the present disclosure may be embodied in various forms without departing from the scope of essential characteristics thereof, the illustrative embodiments and variations are therefore illustrative and not restrictive, since the scope of the present disclosure is defined by the appended claims rather than by the description preceding them. All changes that fall within metes and bounds of the claims, or equivalence of such metes and bounds thereof are therefore intended to be embraced by the claims.

**Claims**

1. A program for controlling operation of a robot, the robot including a plurality of joints and a movable part that is moved as a result of the plurality of joints operating, the program causing a computer to carry out:

    performing singular value decomposition on a first Jacobian matrix that associates operating velocities of the plurality of respective joints with a moving velocity of the movable part to generate a second Jacobian matrix including a first matrix, a second matrix, and a first singular matrix,

      the first matrix including, in its elements, first basis vectors that span an operating velocity space of the joints,
      the second matrix including, in its elements, second basis vectors that span a moving velocity space of the movable part,
      the first singular matrix including singular values in its diagonal elements;

    determining, as processing to be performed, either first processing or second processing based on a result of comparison between the singular values and a first threshold, and performing the determined processing,

      the first processing being performed in a case where the robot is at a singularity and in a case where the robot is near the singularity,
      the second processing being performed in a case where the robot is away from the singularity;

    in the first processing, generating a third Jacobian matrix by transforming the diagonal elements in the first singular matrix;
    in the first processing, determining an operation command value to command operation of the plurality of joints by using the third Jacobian matrix and a movement command value to command movement of the movable part, and outputting the determined operation command value; and
    in the second processing, determining the operation command value by using the first or second Jacobian matrix and the movement command value, and outputting the determined operation command value.

2. The program according to claim 1, wherein the program causes the computer to carry out:

    calculating a first norm that is a norm of a vector obtained by applying the operation command value to the Jacobian matrix used to determine the operation command value;

in a case where the first norm is greater than the movement command value, correcting the operation command value by using the first norm to determine a corrected operation command value, and outputting the corrected operation command value as the operation command value; and

in a case where the first norm is less than or equal to the movement command value, outputting the operation command value.

3. The program according to claim 1, wherein the program causes the computer to carry out:

receiving first information that is information about specifications of the robot; and

generating the first Jacobian matrix by using the first information and information about states of the plurality of respective joints.

4. The program according to claim 1, wherein the program causes the computer to carry out:

in a case where a smallest value of the singular values is less than the first threshold, determining to perform the first processing; and

in a case where the smallest value of the singular values is greater than or equal to the first threshold, determining to perform the second processing.

5. The program according to claim 1, wherein the program causes the computer to carry out:

generating a second inverse Jacobian matrix that is an inverse matrix of the second Jacobian matrix, the second inverse Jacobian matrix including a first transformation matrix transformed from the first matrix, a second transformation matrix transformed from the second matrix, and a first transformation singular matrix transformed from the first singular matrix;

in the first processing, generating a third inverse Jacobian matrix that is an inverse matrix of the third Jacobian matrix by performing a first transformation to transform diagonal elements in the first transformation singular matrix;

in the first processing, determining the operation command value by applying the movement command value to the third inverse Jacobian matrix; and

in the second processing, determining the operation command value by applying the movement command value to a first inverse Jacobian matrix that is an inverse matrix of the first Jacobian matrix or to the second inverse Jacobian matrix.

6. The program according to claim 5, wherein the program causes the computer to carry out, in the first transformation, transforming each of the diagonal elements in the first transformation singular matrix, the diagonal elements including the singular values, so as to maintain ratios among the diagonal elements.

7. The program according to claim 6, wherein the program causes the computer to carry out, in the first transformation, multiplying each of the diagonal elements by a first ratio, the first ratio being a ratio of a smallest value of the singular values in the first transformation singular matrix to the first threshold.

8. The program according to claim 5, wherein the program causes the computer to carry out:

in the first processing, calculating a second norm that is a norm of a vector obtained by applying, to the third inverse Jacobian matrix, a direction vector that represents a direction of a commanded velocity of the movable part, the commanded velocity being included in the movement command value;

in the first processing, in a case where the second norm is greater than or equal to a second threshold, determining the operation command value by applying the movement command value to the third inverse Jacobian matrix that has been normalized by using the second norm; and

in the first processing, in a case where the second norm is less than the second threshold, determining the operation command value by applying the movement command value to an inverse Jacobian matrix that is obtained by replacing, in the third inverse Jacobian matrix that has been normalized by using the second norm, the second norm with the second threshold.

9. The program according to claim 5, wherein the program causes the computer to carry out:

in the first processing, determining a contribution degree that is a degree to which a commanded velocity of the movable part, the commanded velocity being included in the movement command value, contributes to a direction of one of the second basis vectors;

in the first processing, in a case where the contribution degree is greater than or equal to a third threshold, determining the operation command value by using the third inverse Jacobian matrix;

in the first processing, in a case where the contribution degree is less than the third threshold, transforming the third inverse Jacobian matrix into a fourth inverse Jacobian matrix, such that a value of a diagonal element corresponding to a smallest value of the singular values in the first transformation singular matrix after the first transformation is set to 0; and

in the first processing, in the case where the contribution degree is less than the third threshold, determining the operation command value by applying the movement command value to the fourth inverse Jacobian matrix.

10. The program according to claim 5, wherein the program causes the computer to carry out:

in the first processing, among contribution degrees that are degrees to which a commanded velocity of the movable part, the commanded velocity being included in the movement command value, contributes to directions of the respective second basis vectors, determining a first contribution degree corresponding to a first singular value that is a smallest value of the singular values in the first transformation singular matrix;

in the first processing, in a case where each of the first singular value and a second singular value, the second singular value being a next smallest singular value following the first singular value among the singular values in the first transformation singular matrix, is less than the first threshold, and the first contribution degree is greater than or equal to a third threshold, generating the third inverse Jacobian matrix by multiplying each of the diagonal elements in the first transformation singular matrix by a first ratio of the first singular value to the first threshold, and determining the operation command value by applying the movement command value to the third inverse Jacobian matrix; and

in the first processing, in a case where each of the first singular value and the second singular value is less than the first threshold, and the first contribution degree corresponding to the first singular value is less than the third threshold, setting a value of a diagonal element corresponding to the first singular value in the first transformation singular matrix to 0, generating a fifth inverse Jacobian matrix by multiplying each of the diagonal elements in the first transformation singular matrix by a second ratio of the second singular value to the first threshold, and determining the operation command value by applying the movement command value to the fifth inverse Jacobian matrix.

11. The program according to claim 10, wherein the program causes the computer to carry out, in the first processing, in a case where each of the first singular value and the second singular value is less than the first threshold, and the first contribution degree and a second contribution degree corresponding to the second singular value are less than the third threshold, setting a value of each of diagonal elements corresponding to the first and second singular values in the first transformation singular matrix to 0, generating a sixth inverse Jacobian matrix by multiplying each of the diagonal elements in the first transformation singular matrix by the second ratio, and determining the operation command value by applying the movement command value to the sixth inverse Jacobian matrix.

12. The program according to claim 5, wherein the program causes the computer to carry out:

in the first processing, in a case where each of a first singular value to a k-th singular value (where k is a natural number greater than or equal to 3), including the first singular value that is a smallest value of the singular values in the first transformation singular matrix and two or more next smallest singular values following the first singular value among the singular values in the first transformation singular matrix, is less than the first threshold, determining a first contribution degree to a k-th contribution degree that are degrees to which a commanded velocity of the movable part, the commanded velocity being included in the movement command value, contributes to directions of the second basis vectors, the directions corresponding to the first to k-th singular values, respectively;

in the first processing, in a case where each of the first contribution degree to the k-th contribution degree is greater than or equal to a third threshold, in the first transformation, generating the third inverse Jacobian matrix by multiplying each of the diagonal elements in the first transformation singular matrix by a first ratio of the first singular value to the first threshold, and determining the operation command value by applying the movement command value to the third inverse Jacobian matrix;

in the first processing, in a case where at least one of the first contribution degree to the k-th contribution degree is less than the third threshold, in the first transformation, performing a zero transformation to set a value of a diagonal element in the first transformation singular matrix, the diagonal element corresponding to the singular value whose contribution degree is less than the third threshold, to 0, and multiplying each of the diagonal elements in the first transformation singular matrix after the zero transformation by a third ratio to transform the first transformation singular matrix into a seventh inverse Jacobian matrix, the third ratio being a ratio of a smallest singular value, among the singular values in the first transformation singular matrix after the zero transformation excluding the singular value whose contribution degree is less than the third threshold, to the first threshold; and in the first processing, in the case where at least one of the first contribution degree to the k-th contribution degree is less than the third threshold, determining the operation command value by applying the movement command value to the seventh inverse Jacobian matrix.

13. The program according to claim 1, wherein the program causes the computer to carry out:

generating an eighth Jacobian matrix by differentiating the first Jacobian matrix with respect to time; generating an acceleration vector by applying, from among the operating velocities of the plurality of respective joints during the first processing, the velocity in the second basis vector corresponding to self-motion of the robot to the eighth Jacobian matrix; in the first processing, in a case where a norm of the acceleration vector is greater than or equal to a fourth threshold, determining whether or not the norm of the acceleration vector indicates a maximum value; and in a case where the norm of the acceleration vector indicates the maximum value, outputting a command to stop the plurality of joints from operating.

14. A storage medium storing the program according to any one of claims 1 to 13.

15. An information processing apparatus comprising:

a memory that stores the program according to any one of claims 1 to 13; and a processor that executes the program stored in the memory.

16. A system comprising:

an information processing apparatus including a computer that executes the program according to any one of claims 1 to 13; and the robot, wherein:

the information processing apparatus is connected to the robot and to a user interface that receives an input to operate the robot; the information processing apparatus receives, from the user interface, a command to move the movable part, determines the operation command value by using the movement command value that is based on the command to move the movable part, and transmits the operation command value to the robot; and the information processing apparatus receives an input of first information that is information about specifications of the robot, and generates the first Jacobian matrix by using the first information.

17. A method of controlling operation of a robot, the robot including a plurality of joints and a movable part that is moved as a result of the plurality of joints operating, the method comprising:

performing singular value decomposition on a first Jacobian matrix that associates operating velocities of the plurality of respective joints with a moving velocity of the movable part to generate a second Jacobian matrix including a first matrix, a second matrix, and a first singular matrix,

the first matrix including, in its elements, first basis vectors that span an operating velocity space of the joints, the second matrix including, in its elements, second basis vectors that span a moving velocity space of the movable part, the first singular matrix including singular values in its diagonal elements;

determining, as processing to be performed, either first processing or second processing based on a result of comparison between the singular values and a first threshold, and performing the determined processing,

the first processing being performed in a case where the robot is at a singularity and in a case where the robot is near the singularity,

the second processing being performed in a case where the robot is away from the singularity;

in the first processing, generating a third Jacobian matrix by transforming the diagonal elements in the first singular matrix;

in the first processing, determining an operation command value to command operation of the plurality of joints by using the third Jacobian matrix and a movement command value to command movement of the movable part, and outputting the determined operation command value; and

in the second processing, determining the operation command value by using the first or second Jacobian matrix and the movement command value, and outputting the determined operation command value.

FIG. 1

FIG. 2

FIG. 3

FIG. 4

FIG. 5

FIG. 6

FIG. 7

START

RECEIVE SPECIFICATION INFORMATION ABOUT ROBOT ⟋ S1

STORE SPECIFICATION INFORMATION ABOUT ROBOT ⟋ S2

RECEIVE VELOCITY COMMAND VALUE FOR END EFFECTOR ⟋ S3

RECEIVE FEEDBACK INFORMATION ABOUT ROBOT ⟋ S4

CALCULATE JACOBIAN MATRIX ⟋ S5

NORMALIZE JACOBIAN MATRIX ⟋ S6

PERFORM SINGULAR VALUE DECOMPOSITION ON NORMALIZED JACOBIAN MATRIX ⟋ S7

NORM OF NORMALIZED COMMANDED VELOCITY ≥ THRESHOLD? ⟋ S8 — No → TO S10

FROM S10 ⟶ Yes

AT OR NEAR SINGULARITY? ⟋ S9 — No → TO S12

FROM Yes IN S12 ⟶ Yes

CALCULATE CONTRIBUTION DEGREE ⟋ S11

CONTRIBUTION DEGREE ≥ THRESHOLD? ⟋ S13 — No → TO S15

Yes

TO S14

FIG. 8

FROM No IN S8
FROM No IN S12
FROM No IN S14
FROM No IN S15

S10

STATE 0

S1001

SET VELOCITY COMMAND VALUE FOR
END EFFECTOR TO 0

S1002

STOP ROBOTIC ARM FROM OPERATING

S1003

RECEIVE NEW VELOCITY COMMAND
VALUE FOR END EFFECTOR

S1004

RECEIVE NEW FEEDBACK
INFORMATION ABOUT ROBOT

S1005

CALCULATE JACOBIAN MATRIX

S1006

NORMALIZE JACOBIAN MATRIX

S1007

PERFORM SINGULAR VALUE
DECOMPOSITION ON NORMALIZED
JACOBIAN MATRIX

S1008

NORM OF NORMALIZED
COMMANDED VELOCITY ≥
THRESHOLD?

No

Yes

TO S9

FIG. 9

FROM No IN S9
FROM Yes IN S15

S12

STATE NS

S1201

GENERATE VELOCITY COMMAND VALUES FOR
JOINTS ACCORDING TO RESOLVED MOTION
RATE CONTROL FOR STATE NS

S1202

DETERMINE ELECTRIC CURRENT VALUES FOR
MOTORS OF JOINTS AND OUTPUT COMMAND

S1203

RECEIVE NEW VELOCITY COMMAND VALUE
FOR END EFFECTOR

S1204

RECEIVE NEW FEEDBACK INFORMATION
ABOUT ROBOT

S1205

CALCULATE JACOBIAN MATRIX

S1206

NORMALIZE JACOBIAN MATRIX

S1207

PERFORM SINGULAR VALUE DECOMPOSITION
ON NORMALIZED JACOBIAN MATRIX

S1208

NORM OF NORMALIZED
COMMANDED VELOCITY
≥ THRESHOLD?                    No         → TO S10

Yes          S1209

AT OR NEAR SINGULARITY?              No

Yes

TO S11          FIG. 10

FROM Yes IN S13 ⟋ S14

⟋ STATE SC

TRANSFORM INVERSE MATRIX OF NORMALIZED JACOBIAN MATRIX ACCORDING TO RESOLVED MOTION RATE CONTROL FOR STATE SC TO GENERATE NEW MATRIX  ⟋ S1401

NORM OF NEW MATRIX AND COMMANDED VELOCITY ≥ THRESHOLD?  ⟋ S1402

Yes  ⟋ STATE SC-1    No    ⟋ STATE SC-2

GENERATE VELOCITY COMMAND VALUES FOR JOINTS BY USING NEW MATRIX ACCORDING TO RESOLVED MOTION RATE CONTROL FOR STATE SC-1  ⟋ S1410

GENERATE VELOCITY COMMAND VALUES FOR JOINTS BY USING NEW MATRIX WITH FIXED NORM ACCORDING TO RESOLVED MOTION RATE CONTROL FOR STATE SC-2  S1420

DETERMINE ELECTRIC CURRENT VALUES FOR MOTORS OF JOINTS AND OUTPUT COMMAND  ⟋ S1411

DETERMINE ELECTRIC CURRENT VALUES FOR MOTORS OF JOINTS AND OUTPUT COMMAND  ⟋ S1421

RECEIVE NEW VELOCITY COMMAND VALUE FOR END EFFECTOR, CALCULATE NORMALIZED JACOBIAN MATRIX, AND PERFORM SINGULAR VALUE DECOMPOSITION  ⟋ S1412-S1416

RECEIVE NEW VELOCITY COMMAND VALUE FOR END EFFECTOR, CALCULATE NORMALIZED JACOBIAN MATRIX, AND PERFORM SINGULAR VALUE DECOMPOSITION  ⟋ S1422-S1426

NORM OF NORMALIZED COMMANDED VELOCITY ≥ THRESHOLD?  ⟋ S1417   No    No

NORM OF NORMALIZED COMMANDED VELOCITY ≥ THRESHOLD?  ⟋ S1427

Yes  ⟋ S1418

Yes  ⟋ S1428

TRANSFORM INVERSE MATRIX OF NORMALIZED JACOBIAN MATRIX ACCORDING TO RESOLVED MOTION RATE CONTROL FOR STATE SC TO GENERATE NEW MATRIX

TRANSFORM INVERSE MATRIX OF NORMALIZED JACOBIAN MATRIX ACCORDING TO RESOLVED MOTION RATE CONTROL FOR STATE SC TO GENERATE NEW MATRIX

NORM OF NEW MATRIX AND COMMANDED VELOCITY < THRESHOLD?  ⟋ S1419

NORM OF NEW MATRIX AND COMMANDED VELOCITY ≥ THRESHOLD?  ⟋ S1429

No

Yes

Yes    No

TO S10    FIG. 11

FROM No IN S13

S15

STATE P

S1501

FURTHER TRANSFORM INVERSE MATRIX OF
NORMALIZED MATRIX ACCORDING TO
RESOLVED MOTION RATE CONTROL FOR
STATE P TO GENERATE NEW MATRIX

S1502

GENERATE VELOCITY COMMAND VALUES FOR
JOINTS ACCORDING TO RESOLVED MOTION
RATE CONTROL USING NEW MATRIX
GENERATED IN S1501

S1503

DETERMINE ELECTRIC CURRENT VALUES FOR
MOTORS OF JOINTS AND OUTPUT COMMAND

S1504-S1508

RECEIVE NEW VELOCITY COMMAND VALUE
FOR END EFFECTOR, CALCULATE
NORMALIZED JACOBIAN MATRIX, AND
PERFORM SINGULAR VALUE DECOMPOSITION

S1509

NORM OF NORMALIZED
COMMANDED VELOCITY
≥ THRESHOLD?                    No          TO S10

Yes

S1510

CALCULATE CONTRIBUTION DEGREE

S1511

CONTRIBUTION DEGREE
< THRESHOLD, AND
MINIMUM SINGULAR VALUE
≥ THRESHOLD?                    No

Yes

TO S12          FIG. 12

FIG. 13A

FIG. 13B

FIG. 13C

FIG. 14

## INTERNATIONAL SEARCH REPORT

| International application No. |
| --- |
| **PCT/JP2024/032211** |

| A. | CLASSIFICATION OF SUBJECT MATTER |
| --- | --- |

***B25J 9/10***(2006.01)i
FI:   B25J9/10 A

According to International Patent Classification (IPC) or to both national classification and IPC

| B. | FIELDS SEARCHED |
| --- | --- |

Minimum documentation searched (classification system followed by classification symbols)

B25J1/00-21/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 5393461 B2 (THE BOEING COMPANY) 22 January 2014 (2014-01-22) | 1-17 |
| A | JP 7-314363 A (NIPPON TELEGRAPH AND TELEPHONE CORPORATION) 05 December 1995 (1995-12-05) | 1-17 |
| A | 妻木勇一, 小寺真司, Ｄ．Ｎ．ネンチェフ, 内山勝, 6 自由度マニピュレータの特異点適合遠隔操作, 日本ロボット学会誌 , 15 March 1998, vol. 16, no. 2, pp. 61-70, ISSN 0289-1824 (TSUMAKI, Yuichi et al., Singularity-Consistent Teleoperation of a 6-DOF Manipulator) | 1-17 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 October 2024** | **29 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| | International application No. |
|---|---|
| | **PCT/JP2024/032211** |

| Patent document cited in search report | | | Publication date (day/month/year) | Patent family member(s) | | | Publication date (day/month/year) |
|---|---|---|---|---|---|---|---|
| JP | 5393461 | B2 | 22 January 2014 | US | 2007/0112468 | A1 | |
| | | | | WO | 2008/027334 | A2 | |
| | | | | EP | 2073959 | B1 | |
| | | | | CN | 101505925 | A | |
| JP | 7-314363 | A | 05 December 1995 | (Family: none) | | | |

Form PCT/ISA/210 (patent family annex) (July 2022)

**REFERENCES CITED IN THE DESCRIPTION**

**Patent documents cited in the description**

- JP 5393461 B